(19) **Europäisches Patentamt / European Patent Office / Office européen des brevets**

(11) **EP 1 652 698 B1**

(12) # EUROPEAN PATENT SPECIFICATION

(45) Date of publication and mention of the grant of the patent:
**22.10.2014 Bulletin 2014/43**

(51) Int Cl.:
**B60F 1/04** (2006.01)  **B60F 1/00** (2006.01)
**B60F 1/02** (2006.01)

(21) Application number: **04748274.0**

(22) Date of filing: **06.08.2004**

(86) International application number:
**PCT/JP2004/011350**

(87) International publication number:
**WO 2005/014313 (17.02.2005 Gazette 2005/07)**

(54) **DUAL-MODE VEHICLE, TRAVELING METHOD OF DUAL-MODE VEHICLE, WHEEL LOAD CONTROLLING METHOD OF DUAL-MODE VEHICLE, STRUCTURE BODY FOR TRAVELING MODE CONVERSION, AND DUAL- MODE TRAFFIC SYSTEM**

DOPPELMODUS-FAHRZEUG, FAHRVERFAHREN FÜR DOPPELMODUS-FAHRZEUG, RADLASTSTEUERVERFAHREN FÜR DOPPELMODUS-FAHRZEUG, AUFBAUKÖRPER ZUR FAHRMODUSUMSTELLUNG UND DOPPELMODUS-VERKEHRSSYSTEM

VEHICULE BI-MODE, PROCEDE DE CIRCULATION DE VEHICULE BI-MODE, PROCEDE DE CONTROLE DE LA CHARGE DES ROUES DE VEHICULE BI-MODE, CAISSE STRUCTURELLE POUR LA CONVERSION DE MODE DE CIRCULATION, ET SYSTEME DE CIRCULATION BI-MODE

(84) Designated Contracting States:
**AT BE BG CH CY CZ DE DK EE ES FI FR GB GR HU IE IT LI LU MC NL PL PT RO SE SI SK TR**

(30) Priority: **06.08.2003 JP 2003287675**
**06.08.2003 JP 2003287685**
**20.01.2004 JP 2004012033**

(43) Date of publication of application:
**03.05.2006 Bulletin 2006/18**

(73) Proprietors:
• **Hokkaido Railway Company**
  **Sapporo-shi,**
  **Hoddaido 060-8644 (JP)**
• **Nichijo Manufacturing Co., Ltd.**
  **Sapporo-shi,**
  **Hokkaido 006-0033 (JP)**
• **Nippon Steel & Sumitomo Metal Corporation**
  **Tokyo 100-8071 (JP)**
• **Isuzu Body Corporation**
  **Fujisawa-City, Kanagawa 252-0806 (JP)**

(72) Inventors:
• **KAKINUMA, Hirohiko,**
  **HOKKAIDO RAILWAY COMPANY**
  **Sapporo-shi,**
  **Hokkaido 060-8644 (JP)**
• **TAMAOKI, Toshiharu,**
  **HOKKAIDO RAILWAY COMPANY**
  **Sapporo-shi,**
  **Hokkaido 060-8644 (JP)**
• **SATO, Iwao,**
  **HOKKAIDO RAILWAY COMPANY**
  **Sapporo-shi,**
  **Hokkaido 060-8644 (JP)**
• **SHIKIMURA, Asoo,**
  **HOKKAIDO RAILWAY COMPANY**
  **Sapporo-shi,**
  **Hokkaido 060-8644 (JP)**
• **ARAKAWA, Hiroshi,**
  **HOKKAIDO RAILWAY COMPANY**
  **Sapporo-shi,**
  **Hokkaido 060-8644 (JP)**
• **ITOH, Fumio,**
  **HOKKAIDO RAILWAY COMPANY**
  **Sapporo-shi,**
  **Hokkaido 060-8644 (JP)**
• **OHTA, Masaki,**
  **HOKKAIDO RAILWAY COMPANY**
  **Sapporo-shi,**
  **Hokkaido 060-8644 (JP)**
• **KAGA, Hiroshi,**
  **HOKKAIDO RAILWAY COMPANY**
  **Sapporo-shi,**
  **Hokkaido 060-8644 (JP)**

- **GOUDA, Yoshiharu,**
  **SUMIKIN DESIGN-ENGIN CO., LTD.**
  **Osaka-shi,**
  **Osaka 554-0024 (JP)**
- **KISHI, Toshifumi,**
  **SUMITOMO METAL INDUSTRIES, LTD.**
  **Osaka-shi,**
  **Osaka 541-0041 (JP)**
- **MATSUGAMI, Michitaka,**
  **ISUZU BODY CORPORATION**
  **Fujisawa-City,**
  **Kanagawa 252-0806 (JP)**
- **FUJII, Toshihiro,**
  **ISUZU BODY CORPORATION**
  **Fujisawa-City,**
  **Kanagawa 252-0806 (JP)**

(74) Representative: **Albutt, Anthony John et al**
**D Young & Co LLP**
**120 Holborn**
**London EC1N 2DY (GB)**

(56) References cited:
| DE-A1- 3 724 398 | JP-A- 02 256 557 |
| JP-A- 03 266 767 | JP-A- 07 009 825 |
| JP-A- 08 300 920 | JP-A- 09 512 514 |
| JP-A- 51 007 609 | JP-A- 58 110 365 |
| US-A- 3 019 742 | US-A- 3 434 432 |

**Description**

Technical Field of the Invention

The present invention relates to a dual-mode vehicle capable of running on roads and tracks, a method for running the dual-mode vehicle, a method for controlling the wheel load thereof, a structure for converting the running mode of the dual-mode vehicle from the road running mode to the track running mode, and a dual-mode transportation system provided with the dual-mode vehicles and the structure for converting the running mode.

Background Art of the Invention

At present, depopulation has been advanced in local and mountainous areas in line with concentration of population in urban areas. The depopulation has brought about a decrease in people utilizing local railways (so-called local lines) and local route buses. Therefore, railway businesses and bus businesses has been urged to create novel transportation systems instead of local railways and local route buses in order to reduce service and management costs.

In such situations, recently, a transportation system (hereinafter called a "dual-mode transportation system") that makes use of advantages in both railway vehicles and buses by making tracks and roads seamless has been constructed, wherein such moves have been attempted to accomplish a reduction in vehicle costs, maintenance costs, running costs, etc. And, in order to construct the dual-mode transportation system, a vehicle (called a "dual-mode vehicle") capable of running on tracks and roads has been under development.

Here, as a conventional vehicle that can run on both of tracks and roads, a special-purpose vehicle (track-road vehicle) aimed at maintenance and inspection work of tracks has been made available. The track-road vehicle has been constructed on the basis of a truck vehicle running on roads, which is provided with both iron wheels being wheels for running on tracks and tire wheels being wheels for running on roads, and it is devised that, while the iron wheels are lowered and are placed on rails of a track when running on a track, the iron wheels are raised when running on a road, and the iron wheels are stowed above the tire wheels (for example, refer to the following Patent Document 1).

In recent years, several types of driving systems have been developed as driving systems of such a track-road vehicle), in one of which tire wheels and iron wheels are driven by separate driving apparatuses, and in another of which tire wheels and iron wheels are driven by one driving source having a mechanism of using rollers provided, by which driving forces of the tire wheels are transmitted to the iron wheels (for example, refer to the following Patent Document 2).

Patent document 1: Japanese Published Unexamined Patent Application No. H11-209087
Patent document 2: Japanese Published Unexamined Patent Application No. 2001-233031

US 3,434,432 discusses a convertible rail-highway vehicle.
JP 51-007609 discusses a rail system for a railroad wheel arrangement.

Disclosure of the Invention

Problems to be Solved by the Invention

However, if the driving systems for the track-road vehicle are employed, as they are, as a driving system of a dual-mode vehicle, there are the following problems. That is, if the driving system in which tire wheels and iron wheels are driven by separate driving apparatuses is employed, there is a problem in that costs for producing the driving apparatuses and costs for maintenance and inspection are increased, and at the same time, since it is necessary to incorporate separate driving apparatuses for wheels, the weight of a vehicle is increased.

In addition, where the stowing position of iron wheels for running on tracks is low, and where the iron wheels are lowered due to a certain factor, there may be cases where the iron wheels are brought into contact with a road when a dual-mode vehicle runs on a road, and the road surface is damaged. Also, there is another problem in that, since the friction force between the iron wheels for running on a track and rails of the track is slight, it becomes difficult for the vehicle to run at a high speed.

In this connection, in recent years, such an attempt has been made, by which a dual-mode vehicle is constructed by providing rubber tires for running on a road and guide wheels for running on a track at the front and rear parts of a bus body, and the front and rear guide wheels are brought into contact with a track for guiding by rails, and the rear rubber tires are brought into contact with the tracks to generate a driving force. In such a case, although the front side load of the vehicle is supported only by the front guide wheels, the rear side load is shared by both of the rear guide wheels and the rear rubber tires, which are disposed adjacent to each other. At present, based on experience, the load-sharing ratio has been established so that, in a stationary state, approximately 40% of the rear load of a vehicle is supported by guide wheels and approximately the remaining 60% thereof is supported by rubber tires.

However, even if the rear load of the vehicle is shared by the guide wheels and the rubber tires at the load sharing ratio (40:60) described above in a stationary state of the vehicle, the load (wheel load) shared by the guide wheels and rubber tires always changes since shifting of the center of gravity of the vehicle and vibrations of the vehicle occurs from acceleration and deceleration when the vehicle runs. Therefore, a possibility that idle running of the rubber wheels being drive wheels and escape of the guide wheels from a track is increased, still another problem arises in driving performance and running stability.

On the other hand, when a track-road vehicle being a conventional vehicle capable of running on both a track and a road is transferred from a road to a track, remarkably large-scaled work is required, in which, after the track-road vehicle is once stopped, the track-road vehicle is lifted up by a large-sized equipment and moved onto a track and is lowered on the track while visually checking the positional relationship between the iron wheels of the track-road vehicle and the rails to place the iron wheels on the rails. Therefore, in order to construct a "dual-mode transportation system, it was necessary to develop a vehicle capable of running on both a track and a road, and simultaneously necessary to devise means for converting the running system to smoothly shift the vehicle from on-road running to on-track running.

It is therefore an object of the invention to provide a dual-mode vehicle that is capable of running on both a road and a track, can contribute to construction of a "dual-mode transportation system," which is highly expected in the future, and is remarkably inexpensive in the vehicle costs, a method for running the same, and a method for controlling wheel load.

In addition, it is another object of the invention to provide a structure for converting running modes by which smooth running modes can be converted from the on-road running mode to the on-track running mode in the dual-mode vehicle described above.

Further, it is still another object of the invention to provide a dual-mode transportation system provided with the above-described dual-mode vehicle and the above-described structure for converting the running modes.

Means for Solving the Problems

In accordance with the first aspect of the invention, the dual-mode vehicle comprises: front and rear tires attached to the front and rear part of a vehicle via axles; drive wheels for running on a track, which are attached to the same axles as those of the rear tires; and front and rear guide wheels, which are made to be raised and provided at the front and rear parts of a vehicle, for running on a track.

Since such a construction is provided with front and rear tires secured at the front and rear parts of a vehicle via axles, it is possible for the vehicle to run on a road in a state where a plurality of passengers board the vehicle body as in a conventional bus. Also, since the construction is provided with drive wheels for running on a track, which are secured on the same axial center as that of the rear tires and the front and rear guide wheels for running on a track, which are secured at the front and rear parts of the vehicle body, it is possible for the vehicle to run on a track in a state where a plurality of passengers board the vehicle as in a conventional railway vehicle. Further, since the front and rear guide wheels are made to be raised, the wheels can be raised when running on a road, and can be lowered when running on a track to be placed on rails of the track. Therefore, it is possible to smoothly convert the running mode from the on-road running to the on-track running. Accordingly, the construction can favorably contribute to configuration of a "dual-mode transportation system" which is expected in the future.

Further, since the drive wheels for running on a track are provided on the same axial center as that of the rear tires, a drive apparatus and a power transmission apparatus to drive and rotate the rear tires are used as they are, wherein the drive wheels can be driven and rotated. Furthermore, a suspension apparatus for improving ride comfort in running on a road, and a differential apparatus used to control the number of revolutions of the left and right tires in running on a curved road can be used as they are, when running on a track by means of the drive wheels. Therefore, since it is not necessary to provide any new drive apparatus for running on a track, it is possible to remarkably reduce the vehicle cost.

Preferably, in the dual-mode vehicle, the drive wheels are made smaller in diameter than the rear tires and have a substantially flat wheel tread formed in the entire area of the width direction thereof.

With such a construction, since a substantially flat wheel tread is formed on the entire area in the width direction of a drive wheel for running on a track, and a flange for a rail guide, (which is provided in a conventional wheel for running on a track), is not provided, it is possible to secure a sufficient spacing between the drive wheel and a road when a vehicle runs on a road using the front and rear tires. Therefore, where the road is uneven, it is possible to prevent the road in advance from being damaged due to the drive wheel being brought into contact with the road. Further, although the drive wheel is not provided with a flange for a rail guide, it becomes possible to secure an accurate rail guide by the front and rear guide wheels being provided with flanges for rail guides. In addition, since a substantially flat wheel tread is formed on the entire area in the width direction of the drive wheel for running on a track, and a flange for a rail guide is not provided, the drive wheel can move leftward and rightward (within a range by which no escape from a track is brought about) on rails of a track when running on a track. Therefore, even in a case where the distance between the axles of the front and rear guide wheels is long, and where a vehicle runs on a curved track having a small curvature ratio, there is no case where the drive wheel is caught by rails, wherein smooth running on a curved track can be achieved.

Preferably, the drive wheels are composed of a rubber material or a synthetic resin material.

With such a construction, since the drive wheel for running on a track may be made of a comparatively soft material, there is no case where the road surface is not damaged even if the drive wheel is brought into contact with the road surface during running on a road. In addition, such a rubber-made drive wheel or a synthetic resin-made drive wheel is tightly brought into contact with a rail as it is slightly deformed to the rail of a track, the friction force between the drive wheel and the rail is increased, wherein on-track running at a high speed can be achieved.

In the dual-mode vehicle, preferably, the front and rear guide wheels are composed so that the width dimensions thereof are set to a larger value than the standardized width dimension (e.g., 120mm to 150mm) of wheels for running on a track so as to correspond to a predetermined broad track range (e.g., a broad track range of a structure for converting running modes) having a broader rail gauge dimension than the standardized rail gauge dimension.

With such a construction, it is possible to prevent the front and rear guide wheels in advance from escaping from a broad track. Therefore, running mode conversion from the on-road running mode to the on-track running mode can be achieved without fail.

In the dual-mode vehicle, preferably, the front and rear guide wheels are composed so that the flange angle thereof is set to a larger value than the standardized flange angle (e.g., about 60° to about 65°) of wheels for running on a track and the flange height is set to a larger value than the standardized flange height (e.g., about 27mm) of wheels for running on a track.

With such a construction, even in a case where the wheel load of the front and rear guide wheels is decreased, escape from a track can be effectively prevented, and running stability can be improved.

In the dual-mode vehicle, preferably, the rear guide wheels are disposed adjacent to the drive wheels; and, are provided with wheel load controlling units for controlling the wheel loads of the drive wheels and the rear guide wheels. Further, it is preferable that the wheel load controlling units include: idle running judging means for judging whether or not the drive wheels are running idle; drive performance improving means for increasing the wheel load of the drive wheels, while preventing the rear guide wheels from escaping from the rails, by reducing the wheel load of the rear guide wheels so that the wheel load thereof does not fall below a predetermined minimum threshold value where it is judged by the idle running judging means that the drive wheels are running idle; and running stability improving means for reducing the wheel load of the drive wheels, while preventing the drive wheels from idle running, by increasing the wheel load of the rear guide wheels so that the wheel load thereof does not exceed a predetermined maximum threshold value where it is judged by the idle running judging means that the drive wheels are not idle running.

With such a construction, where it is judged that the drive wheel is in an idle running state, it is possible to increase the wheel load of the drive wheel while preventing escape of the rear guide wheel from the rails by reducing the wheel load of the rear guide wheel so that the wheel load does not fall below a predetermined minimum threshold value. Therefore, even in a case where the drive wheel is in an idle running state, the drive wheel can be quickly shifted to a normal drive state (non-idle running state), wherein the drive performance can be improved. Further, where it is judged that the drive wheel is not in an idle running state, it is possible to reduce the wheel load of the drive wheel while preventing the drive wheel from idle running by increasing the wheel load of the rear guide wheel so that it does not exceed a predetermined maximum threshold value. Therefore, it is possible to further improve the running stability while maintaining a normal drive state (non-idle running).

In accordance with the second aspect of the invention, the method for running a dual-mode vehicle is one where the dual-mode vehicle runs on a composite structure including a track range and a tire-running surface; wherein track guiding is carried out by bringing the front and rear guide wheels into contact with the track range of the composite structure, and a drive force is generated by bringing the rear tires into contact with the tire-running surface of the composite structure.

With such a construction, even in a case where a composite structure having a rail portion and a tire-running surface is provided at a part of a track, a dual-mode vehicle will be able to smoothly run on the composite structure.

In accordance with the third aspect of the invention, the method for controlling wheel loads of the dual-mode vehicle is the one for controlling wheel loads of the drive wheels and of the rear guide wheels, judging whether or not the drive wheels are running idle (idle running judging step); increasing the wheel load of the drive wheels (drive performance improving step), while preventing the rear guide wheels from escaping from the rails, by reducing the wheel load of the rear guide wheels so that the wheel load thereof does not fall below a predetermined minimum threshold value where it is judged in the idle running judging step that the drive wheels are running idle; and reducing the wheel load of the drive wheels (running stability improving step), while preventing the drive wheels from idle running, by increasing the wheel load of the rear guide wheels so that the wheel load thereof does not exceed a predetermined maximum threshold value where it is judged in the revolution state detecting step that the drive wheels are not in an idle running.

With such a construction, where it is judged that the drive wheel is in an idle running state, it is possible to increase the wheel load of the drive wheel while preventing escape of the rear guide wheel from the rails by reducing the wheel load of the rear guide wheel so that the wheel load of the rear guide wheel does not fall below a predetermined minimum threshold value. Therefore, even in a case where the drive wheel is in an idle running state, the drive wheel can be quickly shifted to a normal drive state (non-idle running state), wherein the drive performance can be improved. Further, where it is judged that the drive wheel is not in an idle running state, it is possible to reduce the wheel load of the drive wheel while preventing the drive wheel from idle running by increasing the wheel load of the rear guide wheel so that it does not exceed a predetermined maximum threshold value. Therefore, it is possible to further improve the running stability while maintaining a normal drive state (non-idle running).

In accordance with the fourth aspect of the invention, the structure for converting running modes, is the one for converting the running mode of the dual-mode vehicle from an on-road running mode to an on-track running mode, and comprises: a tire-running surface on which the dual-mode vehicle is caused to run by means of the front and rear tires; a guiding range for guiding the dual-mode vehicle to a predetermined track; a broad track range having a broader rail gauge dimension than the standardized rail gauge range; and a rail gauge changing range constructed to the broad track range, the rail gauge of which gradually changes from the broad rail gauge dimension to the standardized rail gauge dimension.

With such a construction, while causing a dual-mode vehicle, which is in the on-road running mode, to enter onto the tire-running surface and causing the same to run by means of the front and rear tires, it is possible to guide the vehicle to predetermined rails by means of a guidance portion. And, it is possible to cause the dual-mode vehicle to enter onto the rails in a broad track range. The rails in the broad track range are set to a broader dimension of a rail gauge than the standardized rail gauge. If the width dimensions of the front and rear guide wheels of the dual-mode vehicle are set to a larger value than normal corresponding to the broad rail gauge dimension, it is possible to easily and securely place the front and rear guide wheels of the dual-mode vehicle on rails even if the structure of the guidance portion has some dimensional distortion and the rail gauge has some dimensional distortion. And, the dual-mode vehicle placed on the rails in the broad track range can be entered to the rail gauge changing portion. Since the rail gauge changing portion has rails constructed so that the rail gauge dimension gradually changes from the broad rail gauge dimension to the standardized rail gauge dimension, the dual-mode vehicle can be gradually guided to the rails having a normal rail gauge while running in the rail gauge changing portion. As a result, the dual-mode vehicle can be securely shifted from the on-road running mode to the on-track running mode while running.

In accordance with the fifth aspect of the invention, the dual-mode transportation system comprises: the above-described dual-mode vehicle; a road on which the dual-mode vehicle can run by means of the front tires and the rear tires; a track including the standardized rail gauge dimension in which the dual-mode vehicle can run by means of the front and rear guide wheels and the drive wheels; and a structure for converting running modes according to Claim 11, which is disposed between the road and the track; wherein while the dual-mode vehicle that is in an on-road running mode is converted to an on-track running mode by means of the structure for converting the running modes, the dual-mode vehicle that is in an on-track running mode is converted to the on-road running mode.

With such a construction, it is possible to convert the dual-mode vehicle, which is in the on-track running mode, to the on-road running mode by means of the running mode converting structure while converting the dual-mode vehicle, which is in the on-road running mode, to the on-track running mode. Therefore, it is possible to construct a transportation system for which the advantages of both a railway transportation system and a bus transportation system can be effectively utilized, wherein various effects can be brought about, which include a remarkable decrease in vehicle costs, prevention of traffic jams, effective utilization of tracks at night, and saving of time and labor for arrival at a destination, etc.

Effects of the Invention

According to the invention, the invention contributes to construction of a "dual-mode transportation system" capable of running on both a road and a track, which is expected in the future, and provides a dual-mode vehicle whose vehicle costs are remarkably inexpensive. Further, the invention provides a method for running of the dual-mode vehicle and a method for controlling the wheel load.

Also, according to the invention, the invention provides a structure for converting the running modes, by which it becomes possible to achieve smooth running mode conversion from the on-road running mode to the on-track running mode in the dual-mode vehicle.

Further, according to the invention, it is possible to configure and construct a transportation system in which the advantages of both the railway transportation system and the bus transportation system can be effectively utilized.

Brief Description of the Drawings

[FIG. 1] This is a perspective view of a dual mode vehicle according to Embodiment 1 of the invention when being observed from above.
[FIG. 2] This is a side elevational view of the dual-mode vehicle depicted in FIG. 1 in its on-road running mode.
[FIG. 3] This is a side elevational view of the dual-mode vehicle depicted in FIG. 1 in its on-track running mode.

[FIG. 4] This is a view depicting states of the rear wheels in the on-track running mode of the dual-mode vehicle depicted in FIG. 1.

[FIG. 5] This is a view depicting states of the rear wheels in the on-road running mode of the dual-mode vehicle depicted in FIG. 1.

[FIG. 6A] This is an explanatory view describing the configuration of drive wheels for running on rails in the dual-mode vehicle depicted in FIG. 1.

[FIG. 6B] This is an explanatory view describing the configuration, etc., of conventional wheels for running on rails.

[FIG. 7A] This is an explanatory view describing the configuration, etc., of the front and rear guide wheels of the dual-mode vehicle depicted in FIG. 1;

[FIG. 7B] This is an explanatory view describing the configuration and the like, of conventional wheels for running on a rail.

[FIG. 8A] This is a plan view of a structure for converting running modes according to Embodiment 1 of the invention.

[FIG. 8B] This is a side elevational view of a structure for converting running modes according to Embodiment 1 of the invention.

[FIG. 9A] This is a plan view depicting a state immediately after the dual-mode vehicle depicted in FIG. 1 enters a broad track range of the structure for converting running modes depicted in FIG. 8.

[FIG. 9B] This is a side elevational view depicting a state immediately after the dual-mode vehicle depicted in FIG. 1 enters a broad track range of the structure for converting running modes depicted in FIG. 8.

[FIG. 10A] This is a plan view depicting a state immediately before the dual-mode vehicle depicted in FIG. 1 enters the rail gauge changing portion of the structure for converting running modes depicted in FIG. 8.

[FIG. 10B] This is a side elevational view depicting a state immediately before the dual-mode vehicle depicted in FIG. 1 enters the rail gauge changing portion of the structure for converting running modes depicted in FIG. 8.

[FIG. 11A] This is a plan view depicting a state immediately before the dual-mode vehicle depicted in FIG. 1 enters a track, passing through the structure for converting the running modes depicted in FIG. 8.

[FIG. 11B] This is a side elevational view depicting a state immediately before the dual-mode vehicle depicted in FIG. 1 enters a track, passing through the structure for converting the running modes depicted in FIG. 8.

[FIG. 12A] This is a plan view depicting a state immediately before the dual-mode vehicle depicted in FIG. 1 shifts from the on-road running mode to the on-track running mode, passing through the structure for converting the running modes depicted in FIG. 8.

[FIG. 12B] This is a side elevational view depicting a state immediately before the dual-mode vehicle depicted in FIG. 1 shifts from the on-road running mode to the on-track running mode, passing through the structure for converting the running modes depicted in FIG. 8.

[FIG. 13A] This is a plan view depicting a state immediately after the dual-mode vehicle depicted in FIG. 1 shifted from the on-road running mode to the on-track running mode, passing through the structure for converting the running modes depicted in FIG. 8.

[FIG. 13B] This is a side elevational view depicting a state immediately after the dual-mode vehicle depicted in FIG. 1 is shifted from the on-road running mode to the on-track running mode, passing through the structure for converting the running modes depicted in FIG. 8.

[FIG. 14A] This is a plan view describing a running motion when the dual-mode vehicle according to Embodiment 1 of the invention passes through a turnout.

[FIG. 14B] This is a side elevational view describing a running motion when the dual-mode vehicle according to Embodiment 1 of the invention passes through a turnout.

[FIG. 15A] This is a view depicting a state of the rear wheels in the on-track running mode of a dual-mode vehicle according to Embodiment 2 of the invention.

[FIG. 15B] This is a view depicting a state of the rear wheels in the on-road running mode of a dual-mode vehicle according to Embodiment 2 of the invention.

[FIG. 16A] This is a perspective view depicting a dual-mode vehicle according to Embodiment 3 when being observed from above.

[FIG. 16B] This is a side elevational view depicting the dual-mode vehicle according to Embodiment 3 of the invention when it runs on rails.

[FIG. 17A] This is an enlarged view depicting the vicinity portion of a flange of the rear guide wheel of the dual-mode vehicle depicted in FIG. 16.

[FIG. 17B] This is an enlarged view depicting the vicinity portion of a flange of a wheel of a conventional railway vehicle.

[FIG. 18] This is a flow chart describing a method for controlling wheel load when the dual-mode vehicle depicted in FIG. 16 runs on rails.

[FIG. 19] This is a side elevational view depicting a conventional railway vehicle.

[FIG. 20] This is a side elevational view of a rail-road vehicle when it runs on rails.

Best Mode for Carrying Out the Invention

Hereinafter, a description is given of embodiments of the invention with reference to the accompanying drawings.

[Embodiment 1]

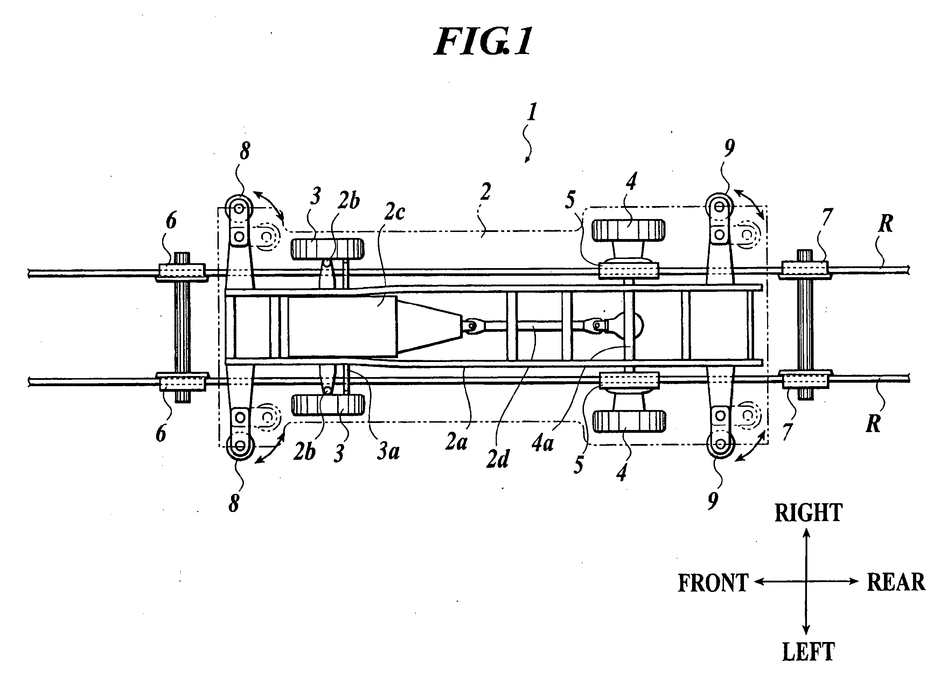

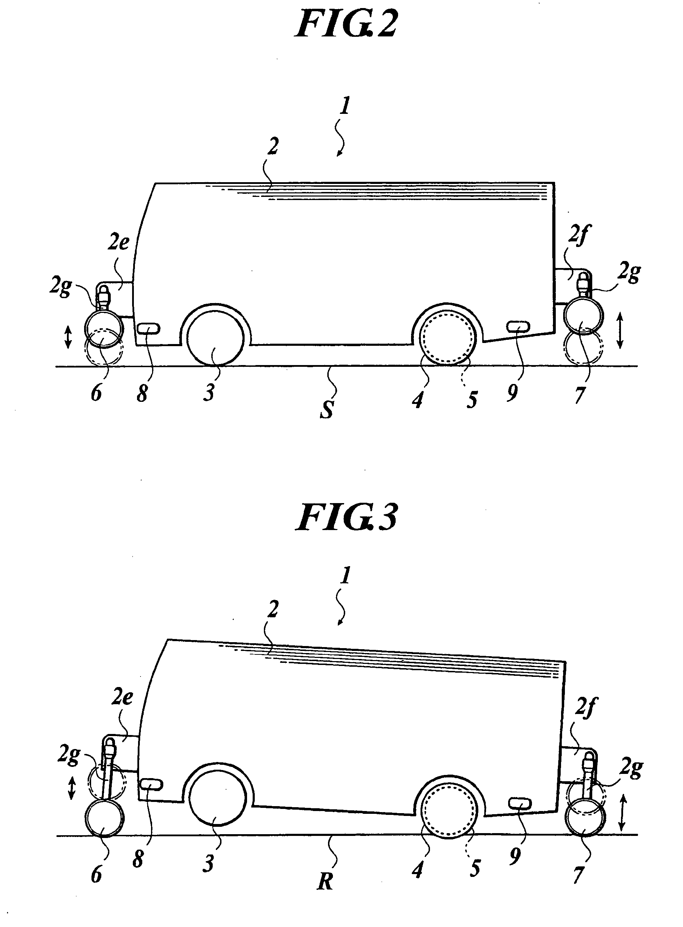

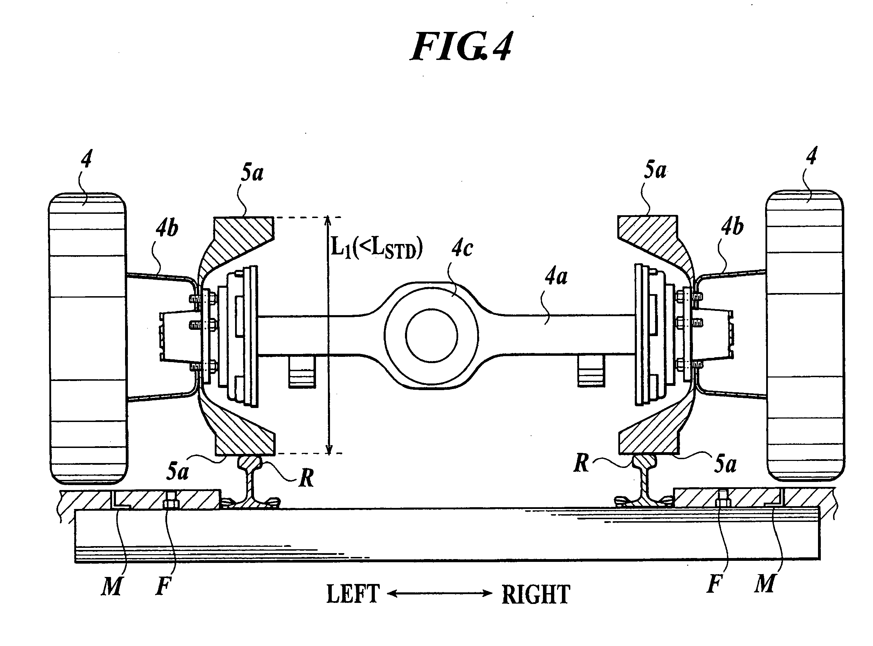

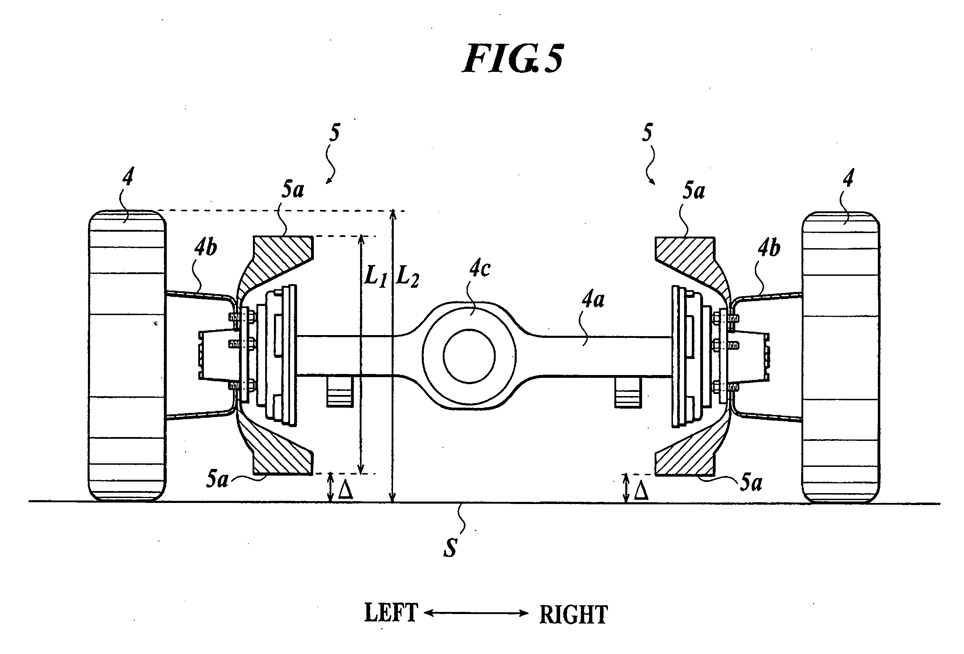

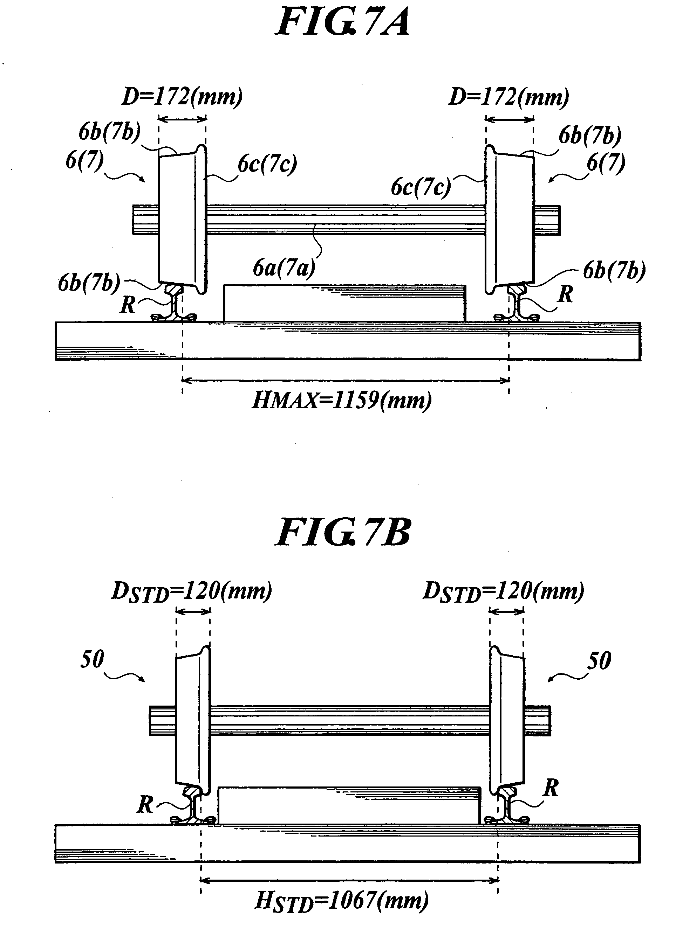

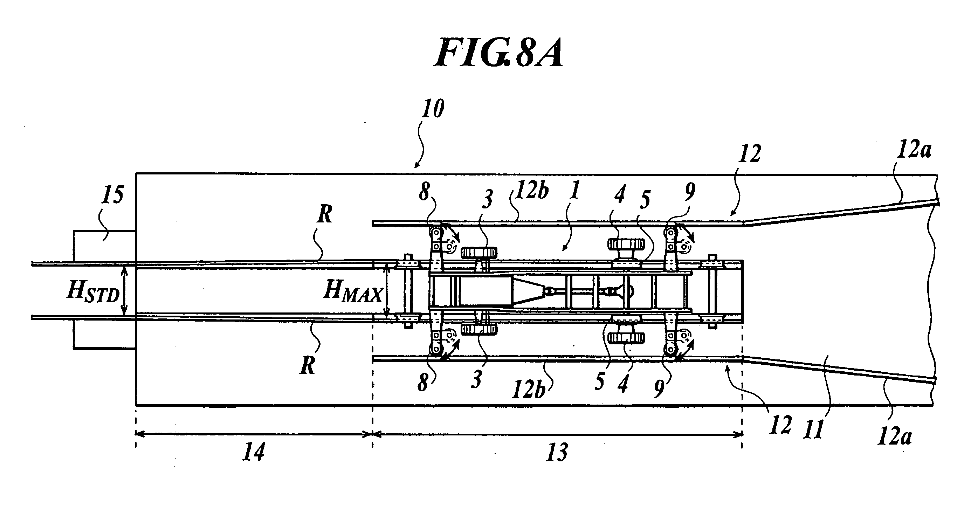

First, using FIG. 1 through FIG. 14, a description is given of a dual-mode transportation system pertaining to Embodiment 1 of the invention. The dual-mode transportation system according to the present embodiment includes a dual-mode vehicle 1 depicted in FIG.1 through FIG. 7B, a road and a track on which the dual-mode vehicle 1 can run, and a structure 10 for converting running modes depicted in FIG. 8A, wherein by means of the structure 10 for converting the running modes, the dual-mode vehicle 1, which is in the on-road running mode, is converted to the on-track running mode, and the dual-mode vehicle 1, which is in the on-track running mode, is converted to the on-road running mode. A road has a road surface S on which the dual-mode vehicle 1 can run by means of its front and rear tires 3 and 4, as depicted in FIG. 2 and FIG. 5. In addition, a track has rails R on which the dual-mode vehicle 1 can run by means of its front and rear guide wheels 6 and 7 and drive wheels 5, as depicted in FIG. 3 and FIG. 4. The rail gauge dimensions of the rails R are made into the standardized value (1067mm).

First, a description is given of the configuration of the dual-mode vehicle 1 according to Embodiment 1 of the invention, using FIG. 1 through FIG. 7. The dual-mode vehicle 1 is constructed based on a microbus vehicle, and can achieve both on-road running based on the front and rear tires 3 and 4 and on-track running based on wheels for running on a track (that is, drive wheels 5, and front and rear guide wheels 6 and 7) by free conversion thereof. The dual-mode vehicle 1 is indispensable to construction of the "dual-mode transportation system."

As depicted in FIG. 1 through FIG. 3, the dual-mode vehicle 1 is composed to be provided with front tires 3 and rear tires 4 rotating around the axles secured at the front and rear parts of the vehicle 2 of a microbus, a drive wheel 5 for running on a track rotating around the axles 4a of the rear tires 4, front guide wheels 6 and rear guide wheels 7 for running on a track, which are provided at the front and rear parts of the vehicle 2 and can be freely raised and lowered, and front guide rollers 8 and rear guide rollers 9 which are provided so as to freely protrude and to be stowed at the front and rear parts of the vehicle 2.

The front tires 3 are axially supported as a pair at the left and right sides on the front axle (not illustrated) secured via suspension devices 2b of the chassis 2a of the vehicle body 2. The directions of the front tires 3 can be changed by a steering device 3a connected to the handle of the driver's seat of the vehicle body 2.

The rear tires 4 are axially supported as a pair at the left and right sides on the rear axle 4a secured via suspension devices (not illustrated) of the chassis 2a of the vehicle body 2, and are driven by an engine 2c and a power transmission device 2d. And, the number of revolutions of the rear left and right tires 4 are controlled by differential gears 4c depicted in FIG. 4 and FIG. 5 when running on a curved road. Also, the front tires 3 and the rear tires 4 function to support the load of the vehicle body 2 when running on a road.

As depicted in FIG. 4 and FIG. 5, drive wheels 5 are fixed by bolts at the inner side of wheel hubs 4b of the rear tires 4, and are driven by the engine 2c and the power transmission device 2d, which are depicted in FIG. 1, as in the rear tires 4 and are devised to rotate centering around the axle 4a. The drive wheels 5 are made of metal such as iron, etc., and run on the rails R that compose a track, as depicted in FIG. 4. The number of revolutions of the left and right drive wheels 5 are controlled by the differential gears 4c depicted in FIG. 4 and FIG. 5.

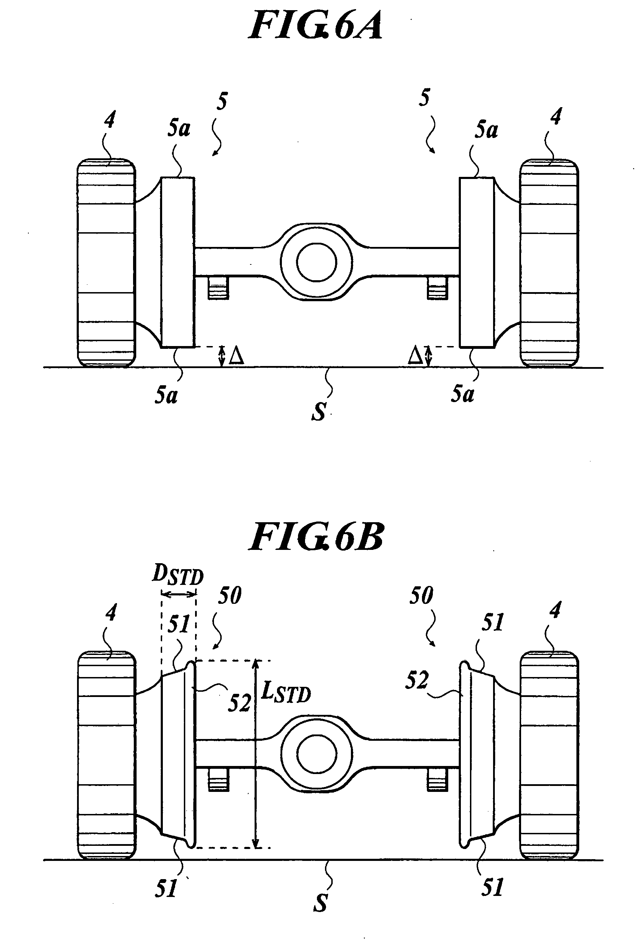

The diameter $L_1$ of the drive wheels 5 is set to be smaller than the diameter $L_2$ of the rear tires 4 as depicted in FIG. 5, and is, on the other hand, set to be larger than the diameter $L_{STD}$ of a conventional wheel 50 for running on a track, which is depicted in FIG. 6B. And, the width dimension of the drive wheels 5 is set to be a larger value than the standardized width dimension $D_{STD}$(120mm through 150mm) of the conventional wheel 50 for running on a track depicted in FIG. 6B.

Also, a flat wheel tread 5a whose tread gradient is substantially 0° as depicted in FIG. 5 is formed on the entire area of the drive wheels 5 in the width direction. Since the diameter $L_1$ of the drive wheel 5 is set to be smaller than the diameter $L_2$ of the rear tire 4 and simultaneously a flat wheel tread 5a is formed on the entire area of the drive wheel 5 in the width direction, comparatively wide clearance $\Delta$ is secured between the drive wheel 5 and the road surface S when running on a road by means of the front tires 3 and the rear tires 4.

In addition, if conventional wheels 50 for running on a track depicted in FIG. 6B are employed instead of the drive wheels 50 according to the present embodiment, the following shortcomings are caused to be present. That is, in the conventional wheels 50 for running on a track, as depicted in FIG. 6B, tread gradient 51 is provided to accommodate a difference between the outside rail and the inside rail of a curved track. Therefore, a cutting tool is required to provide the tread gradient 51, thereby causing cumbersome work. Also, in the conventional wheels 50 for running on a track, as depicted in FIG. 6B, a flange 52 is provided in order to prevent escape from the track. For this reason, where there is unevenness on the road surface S, the flange 52 is brought into contact with the road surface S when running on a road, and there is a possibility that the flange 52 hinders smooth running.

To the contrary, since, in the wheel tread 5a of the drive wheel 5 according to the embodiment, the tread gradient is substantially 0°, cumbersome cutting conventionally required to provide the tread gradient is no longer required. In addition, since the number of revolutions of the left and right drive wheels 5 is controlled by the differential gears 4c depicted in FIG. 4 and FIG. 5 with no tread gradient provided, there is no problem in running on a curved track.

Also, the diameter $L_1$ of the drive wheels 50 according to the embodiment is set to be smaller than the diameter $L_2$ of the rear tires 4. Further, as depicted in FIG. 5 and FIG. 6A, the drive wheels 5 according to the embodiment are not provided with any flange. Therefore, even in cases where there is unevenness on the road surface S, smooth on-road running can be achieved.

Still further, the diameter $L_1$ of the drive wheels 5 according to the embodiment is set to be larger than the diameter $L_{STD}$ of the conventional wheels 50 for running on a track. For this reason, as depicted in FIG. 4, it is possible to secure sufficient intervals between the rear tires 4, sleeper longitudinal members M on a track, and hook bolts F. Accordingly, it is possible to prevent the rear tires 4 from being brought into contact with the sleeper longitudinal members M and the hook bolts F in advance.

As depicted in FIG. 2 and FIG. 3, the front guide wheels 6 and the rear guide wheels 7 are provided on the front frame 2e and the rear frame 2f of the vehicle body 2 by means of hydraulic telescopic cylinders 2g, and are composed so as to be raised and lowered by telescopic motions of the hydraulic telescopic cylinders 2g. As depicted in FIG. 2, when running on a road, the front guide wheels 6 and the rear guide wheels 7 are raised by contraction of the hydraulic telescopic cylinders 2g, and the cylinders 2g are fixed above the front tires 3 and the rear tires 4. On the other hand, when running on a track, as depicted in FIG. 3, the hydraulic telescopic cylinders 2g are elongated to lower the front guide wheels 6 and the rear guide wheels 7, so that the guide wheels 6 and 7 are brought into contact with the rails R of the track.

In addition, the front guide wheels 6 and the rear guide wheels 7 are provided as a pair at the left and right sides, respectively. These left and right front guide wheels 6 and rear guide wheels 7 are connected to each other by means of respective guide axles 6a and 7a as depicted in FIG. 7. Furthermore, as depicted in FIG. 7A, the front guide wheels 6 and rear guide wheels 7 are provided with tread gradients 6b and 7b and flanges 6c and 7c, and achieve a guiding feature to a track. Therefore, even if the drive wheels are not provided with tread gradients and flanges, the dual-mode vehicle 1 can accurately run on a track along the rails.

Also, the width dimensions D of the front guide wheels 6 and the rear guide wheels 7 depicted in FIG. 7A are set to a larger value than the standardized width dimension $D_{STD}$ (120mm through 150mm) of the conventional wheels 50 for running on a track depicted in FIG. 7B. Thus, if the width dimensions D of the front guide wheels 6 and the rear guide wheels 7 are set to a larger value than the width dimension $D_{STD}$ of the conventional wheels 50 for running on a track, there is no case where escape from the rails occurs even in a case where the rail gauge dimension is made broader than the conventional standardized rail gauge dimension $H_{STD}$ (1067mm). In the embodiment, the width dimensions D of the front and rear guide wheels 6 and 7 depicted in FIG. 7A are set to 172mm, corresponding to the rail gauge dimension $H_{MAX}$ (1159mm) in a broad track range 13 of the structure 10 for converting running modes described later.

Also, as depicted in FIG. 3, the front guide wheels 6 function so as to support the load of the vehicle body 2 when running on a track. That is, since the front tires 3 are caused to float above the rails based on a lowering of the front guide wheels 6 in line with elongation of the front hydraulic telescopic cylinders 2g when running on a track, the load of the vehicle body 2 applied onto the front tires 3 will be applied onto the front guide wheels 6.

As depicted in FIG. 1, the front guide rollers 8 and the rear guide rollers 9 are provided in the vehicle body 2 so as to protrude therefrom and to be stowed therein at the left and right side portions of the vehicle body 2. Where the dual-mode vehicle 1 runs on a road and runs on a track, the front guide rollers 8 and the rear guide rollers 9 are stowed in the vehicle body 2. On the other hand, when converting the running mode of the dual-mode vehicle 1 from the on-road running mode to the on-track running mode, the front guide rollers 8 and the rear guide rollers 9 are caused to protrude from the left and right side portions of the vehicle body 2, and are brought into contact with the roller contacting portions 12b of the left and right guide walls 12 of the structure 10 for converting running modes described later. Thus, since the front guide rollers 8 and the rear guide rollers 9 are brought into contact with the roller contacting portions 12b of the left and right guide walls 12, it is possible to guide the dual-mode vehicle 1 to a predetermined track.

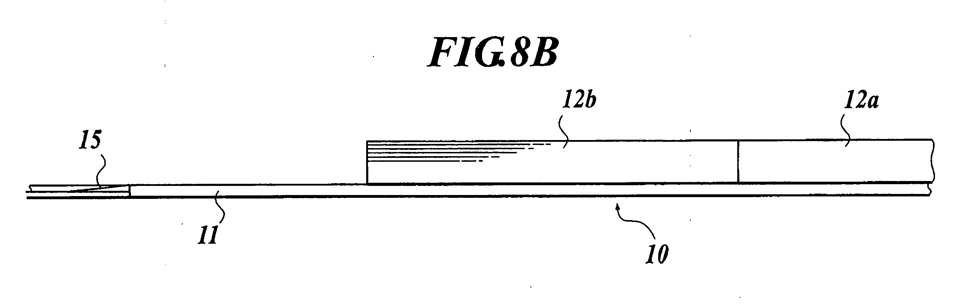

Next, a description is given of the configuration of the structure 10 for converting running modes according to the embodiment, using FIG. 8A and FIG. 8B. The structure 10 for converting the running modes is used to smoothly convert the running mode of the above-described dual-mode vehicle 1 from the on-road running mode to the on-track running mode.

As depicted in FIG. 8A and FIG. 8B, the structure 10 for converting the running modes is composed so as to include a tire-running surface 11, left and right guide walls 12, a broad track range 13, a rail gauge changing range 14, inclination surfaces 15, etc.

The tire-running surface 11 is a surface on which the dual-mode vehicle 1, which is in the on-road running mode, is caused to subsequently run by means of the front and rear tires 3 and 4, and is flatly paved with concrete or asphalt. The left and right guide walls 12 are erected from the tire-running surface 11 as depicted in FIG. 8A and FIG. 8B, and the rails R that compose the broad track range 13 and the rail gauge changing range 14 are buried therein. And, the upper surface of the buried rails R are made substantially flat with the tire-running surface 11.

The left and right guide walls 12 function to guide the dual-mode vehicle 1, which is in the on-road running mode, to a predetermined track, and the walls 12 correspond to a guiding range of the invention. As depicted in FIG. 8A and FIG. 8B, the left and right guide walls 12 are composed of acceptance ranges 12a for accepting the dual-mode vehicle 1 and roller contacting portions 12b by which the front guide rollers 8 of the dual-mode vehicle 1 are brought into contact with the rear guide rollers 9, and are erected on the tire-running surface 11.

The broad track range 13 is a track portion having a broader rail gauge dimension $H_{MAX}$ than the standardized rail gauge dimension $H_{STD}$ (1067mm) as depicted in FIG. 8A. And, the broad track range 13 gradually positions the dual-mode vehicle 1 to a predetermined track. While the dual-mode vehicle 1 runs in the broad track range 13, the front guide wheels 6 and the rear guide wheels 7 are caused to lower and are brought into contact with the rails R in the broad track range 13, and the front tires 3 are isolated from the tire-running surface 11. In addition, in the present embodiment, the rail gauge $H_{MAX}$ in the broad track range 13 is set to 1159mm.

As depicted in FIG. 8A, the rail gauge changing range 14 is connected to the broad track range 13 and is a track portion having a track composed so that the rail gauge dimension is gradually changed from the broad rail gauge dimension $H_{MAX}$ (1159mm) to the standardized rail gauge dimension $H_{STD}$(1067mm) . By the dual-mode vehicle 1 running in the rail gauge changing range 14, the dual-mode vehicle 1 is gradually positioned to a track having the standardized rail gauge dimension $H_{STD}$.

As depicted in FIG. 8A and FIG. 8B, the inclination surface 15 is connected to the tire-running surface 11, and the inclination surface 15 accomplishes the final shift from the on-road running using the front tires 3 and the rear tires 4 to the on-track running using the drive wheels 5, the front guide wheel 6 and the rear wheel 7. As the dual-mode vehicle 1 runs on the inclination surface 15, the rear tires 4 are separated from the tire-running surface 11, and at the same time, the drive wheels 5 for running on a track are brought into contact with the rails R, where the running mode is shifted to complete track running.

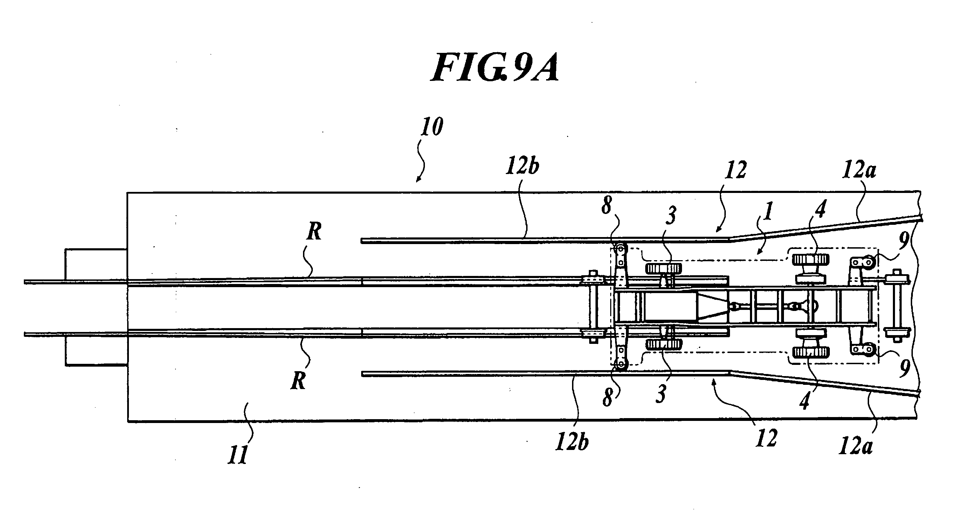

Subsequently, using the structure 10 for converting the running modes according to the embodiment, a description is given of a case of converting motion from the on-road running mode of the dual-mode vehicle 1 to the on-track running mode thereof with reference to FIG. 9A through FIG. 13B.

First, a driver seated in the driver's seat of the vehicle body 2 of the dual-mode vehicle 1 steers the handle and turns the front tires 3 to a desired direction via the steering device 3a, and drives the rear tires 4 via the engine 2c and the power transmission device 2d by stepping on the accelerator, whereby the dual-mode vehicle 1 commences to run on a road. And, the driver causes the dual-mode vehicle 1, which is in the on-road running mode, to run toward the structure 10 for converting the running modes by steering the handle in order to shift the dual-mode vehicle 1 to the on-track running mode, and to enter onto the tire-running surface 11 of the structure 10 for converting the running modes. At this time, the driver decelerates the dual-mode vehicle 1 to a predetermined speed by operating the brake.

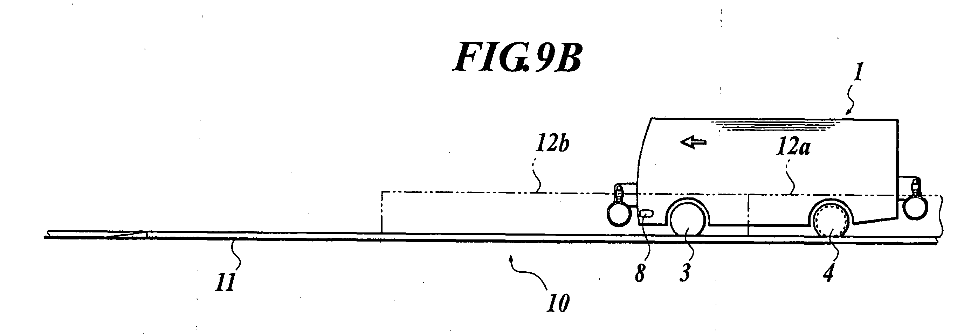

Next, the driver causes the front guide rollers 8 and the rear guide rollers 9 to protrude to the left and right side portions of the vehicle body 2 as depicted in FIG. 9A by carrying out a predetermined switch operation as soon as the dual-mode vehicle 1 enters the acceptance range 12a of the left and right guide walls 12 erected on the tire-running surface 11. By causing the front guide rollers 8 and the rear guide rollers 9 to be brought into contact with the roller contacting portions 12b of the left and right guide walls 12, provisional positioning with respect to a predetermined track is carried out. At this moment, as depicted in FIG. 9B, the dual-mode vehicle 1 still runs on the tire-running surface 11 by means of the front tires 3 and the rear tires 4.

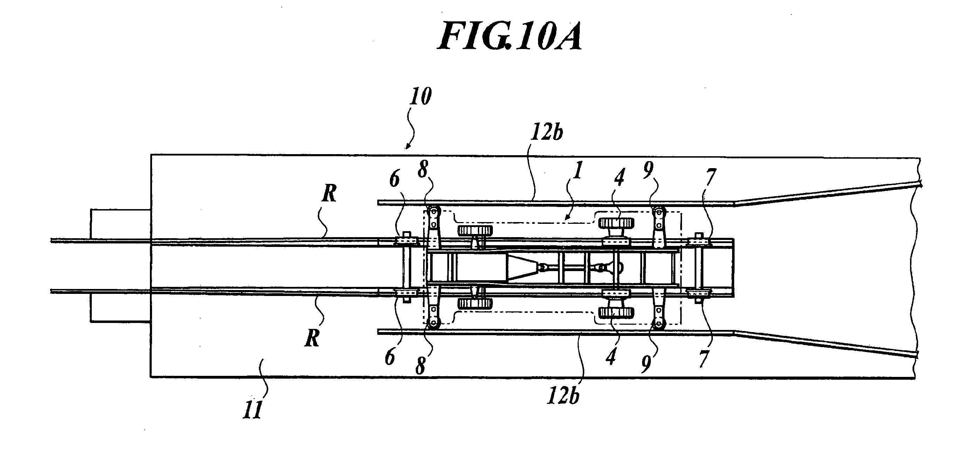

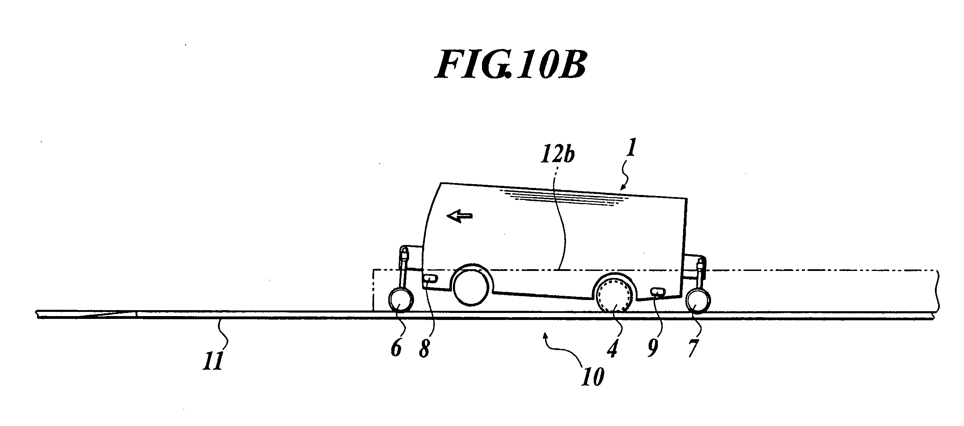

Next, the driver causes the front guide wheels 6 and the rear guide wheels 7 to lower by making a predetermined switch operation, wherein, as depicted in FIG. 10B, the front guide wheels 6 and the rear guide wheels 7 are brought into contact with the rails R of the broad track range 13, and at the same time, the front tires 3 are raised. And, as depicted in FIG. 10A and FIG. 10B, the dual-mode vehicle 1 is guided along the rails R of the broad track range 13 by means of the front guide wheels 6 and the rear guide wheels 7, which have a track guiding function, and the vehicle 1 runs on the tire-running surface 11 by means of the rear tires 4 operating as the drive wheels 4. Also, as depicted in FIG. 10A, since the roller contacting portions 12b of the left and right guide walls 12 are erected continuously to the termination of the broad track range 13, positioning is concurrently carried out by using the front guide rollers 8 and the rear guide rollers 9 of the dual-mode vehicle 1 and the roller contacting portions 12b of the left and right guide walls 12.

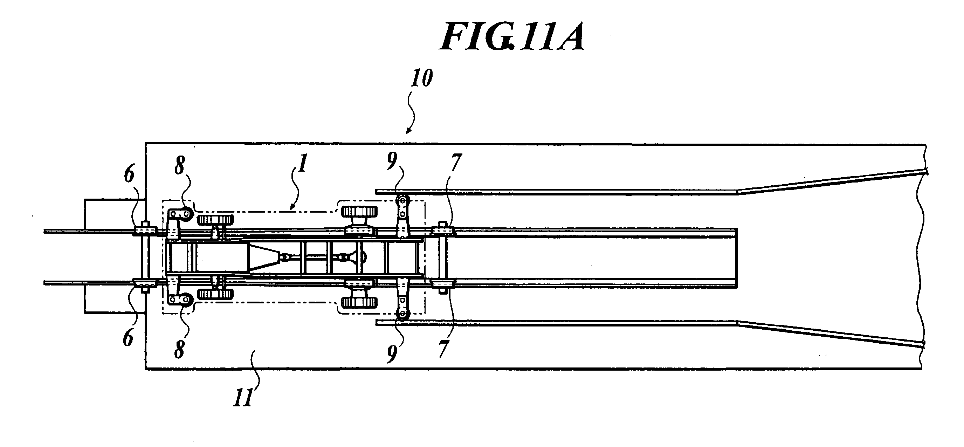

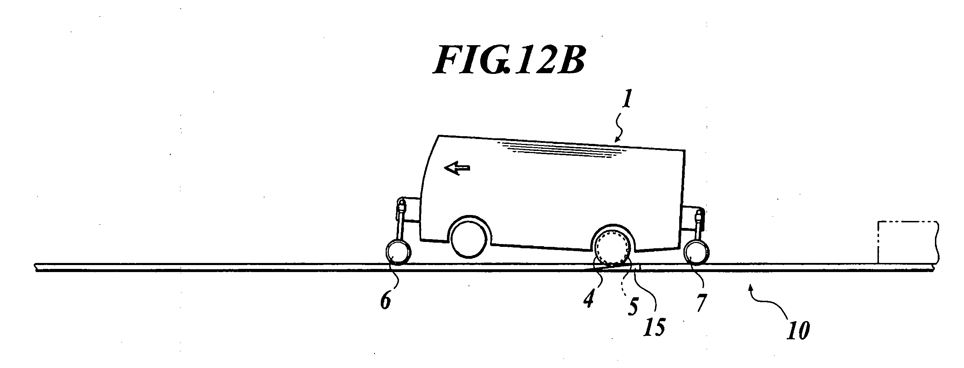

As depicted in FIG. 11A and FIG. 12B, the dual-mode vehicle 1 that passed through the broad track range 13 enters the rail gauge changing range 14 and keeps running based on the rear tires 4, the front guide wheels 6 and the rear guide wheels 7. In addition, as the vehicle 1 enters the rail gauge changing range 14, as depicted in FIG. 11A, contacted states between the front guide rollers 8 and the rear guide rollers 9 of the dual-mode vehicle 1 and the roller contacting portion 12b of the left and right guide walls 12 are gradually released, wherein the driver stows the front guide rollers 8 and the rear guide rollers 9 by making a predetermined switch operation. The dual-mode vehicle 1 is gradually positioned to a track having the standardized rail gauge dimension $H_{STD}$ by running in the rail gauge changing range 14.

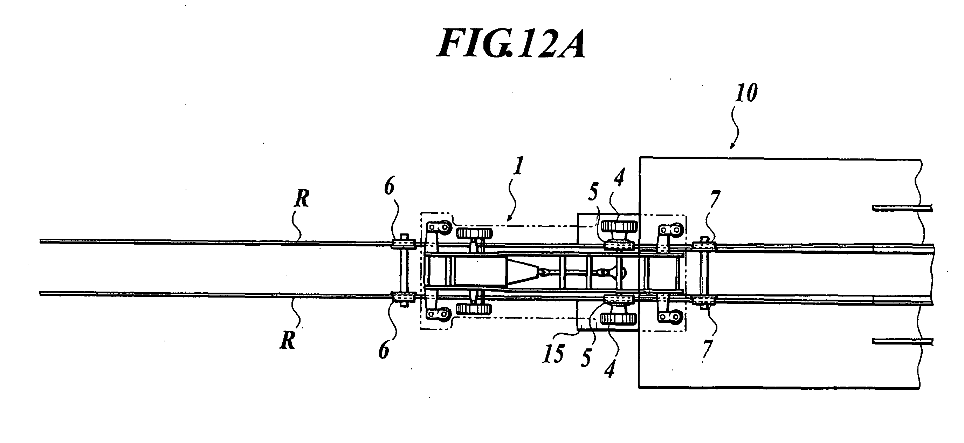

Subsequently, as depicted in FIG. 12A and 12B, the dual-mode vehicle 1 enters the inclination surface 15 from the rail gauge changing range 14 secured on the tire-running surface 11. As the rear tires 4 of the dual-mode vehicle 1 enter the inclination surface 15, the drive wheels 5 for running on a track, which are provided on the same axle as that of the rear tires 4, are brought into contact with the rails R buried in the inclination surface 15 as depicted in FIG. 12B. And, the rear tires 4 and the inclination surface 5 are gradually isolated from each other, wherein, while the vehicle thrust force resulting from a friction force between the rear tires 4 and the inclination surface 15 is gradually reduced, and finally extinguished, a vehicle thrust force resulting from a friction force between the drive wheels 5 and the rails R is generated and is gradually increased.

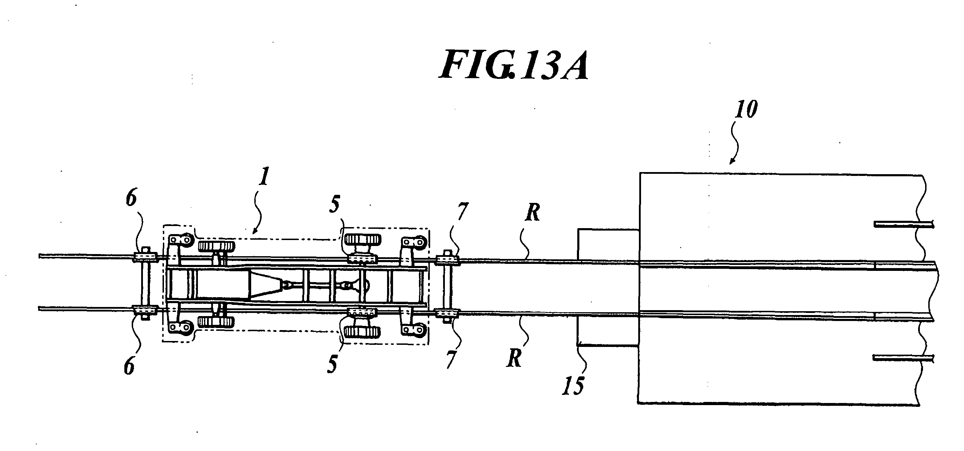

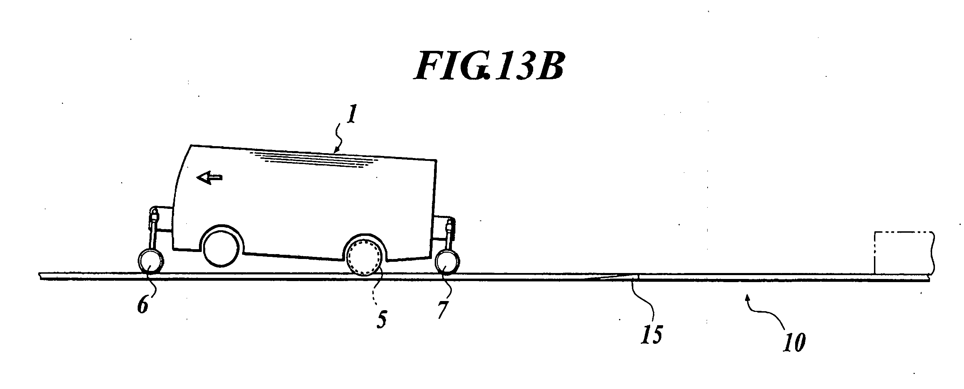

After that, as the rear tires 4 completely pass through the inclination surface 15, the dual-mode vehicle 1 is completely shifted, as depicted in FIG. 13A and FIG. 13B, to the on-track running mode by the drive wheels 5 for running on a track, the front guide wheels 6 and the rear guide wheels 7. The driver boarded in the driver's seat of the vehicle body 2 of the dual-mode vehicle 1 steps on the accelerator and drives the drive wheels 5 via the engine 10 and the power transmission device 11, and at the same time, the vehicle 1 is guided along the track by the front guide wheels 6 and the rear guide wheels 7, whereby on-track running can be carried out. Further, when the on-track running is carried out, as depicted in FIG. 13B, even if the driver steers the handle during on-track running since the front tires 3 are floated upwards, the on-track running is not completely influenced.

Since the dual-mode vehicle 1 according to Embodiment 1 described above is provided, as depicted in FIG. 2, with a vehicle body 2 on which a plurality of passengers are boarded, front tires 3 and rear tires 4 secured at the front and rear parts of the vehicle body 2 via axles, it is possible to carry out on-road running in a state where a plurality of passengers are boarded thereon as in conventional microbuses. In addition, as depicted in FIG. 3, since the dual-mode vehicle 1 is provided with drive wheels 5 for running on a track, which are secured on the same axles as that of the rear tires 4, the front guide wheels 8 and the rear guide wheels 9 for running on a track, which are provided at the front and rear parts of the vehicle body 2, it is possible to carrying out on-track running in a state where a plurality of passengers are boarded thereon as in conventional railway vehicles.

And, while the front guide wheels 8 and the rear guide wheels 9 are fixed during on-road running in a state where these guide wheels 8 and 9 are floated, the guide wheels 8 and 9 may be lowered and be placed on the rails R of a track in on-track running. Therefore, it is possible to smoothly convert the running modes from the on-road running to the on-track running. Accordingly, the front guide wheels 8 and the rear guide wheels 9 favorably contribute to construction of a "dual-mode transportation system" which is expected in the future.

Also, since the drive wheels 5, for running on a track, of the dual-mode vehicle 1 according to the embodiment described above are composed so that the drive wheels 5 are fixed on the wheel hubs 4b of the rear tires 4 as depicted in FIG. 4 and FIG. 5 and driven and rotated by the same drive source (engine 2d, etc.) as that of the rear tires, no new drive device for running on a track is required. Further, suspension devices secured in order to improve ride comfort when running on a road and differential gears 4c used for control of the number of revolutions of the left and right tires when running on a curved road can be used, as they are, when running on a track by means of the drive wheels 5. Therefore, it is possible to remarkably reduce the vehicle costs.

In addition, as depicted in FIG. 5 and FIG. 6A, the drive wheels 5 for running on a track are made smaller in diameter than the rear tires 4 for running on a road in the dual-mode vehicle 1 according to the embodiment described above, and at the same time, a substantially flat wheel tread 5a is formed on the entire area in the width direction of the drive wheels 5, wherein any flange 52 for track guide, which is provided in the conventional wheels 50 for running on a track, is not provided. Therefore, when running on a road by means of the front tires 3 and the rear tires 4, sufficient clearance $\Delta$ can be secured between the drive wheels 5 and the road surface S as depicted in FIG. 5. Therefore, even where there is unevenness on the road surface, it is possible to prevent the drive wheels 5 from being brought into contact with the road surface and to prevent the same from being damaged in advance. Further, even if any flange 52 for track guide is not provided for the drive wheels 5, it becomes possible to secure an accurate track guide by means of the flanges 6c and 7c of the front guide wheels 6 and the rear guide wheels 7, which are depicted in FIG. 7A.

Also, as depicted in FIG. 4, since a substantially flat wheel tread 5a is formed on the entire area in the width direction of the drive wheels 5 for running on a track and no flange for track guide is provided in the drive wheels 5, the drive wheels 5 can shift in the crosswise direction on the rails R of a track during running on a track (within a range by which no escape from the rails occurs). Therefore, even where the axle distance between the front guide wheels 6 and the rear guide wheels 7 is long and even when running on a curved track having a small curvature ratio, there is no case where the drive wheels 5 are caught by the rails R, wherein smooth running on a curved track can be achieved.

In addition, in the dual-mode vehicle 1 according to the embodiment described above, as depicted in FIG. 7A, the width dimension D of the front guide wheels 6 and the rear guide wheels 7 is set to 172mm (>$D_{STD}$), corresponding to the rail gauge dimension $H_{MAX}$ (1159mm) of the broad track range 13 of the structure 10 for converting running modes. Accordingly, even when the dual-mode vehicle 1 enters the broad track range 13 to shift from the on-road running mode to the on-track running mode, it is possible to securely place the broad front and rear guide wheels 6 and 7 in the broad track range 13 having the broad rail gauge dimension

$H_{MAX}$. As a result, the front guide wheels 6 and the rear guide wheels 7 can be prevented from escaping from the rails R in advance, and it is possible to securely achieve the running mode conversion from the on-road running mode to the on-track running mode.

Further, in the dual-mode vehicle 1 according to the embodiment described above, it is possible to guide the vehicle 1 to a predetermined track by means of the left and right guide walls 12, which correspond to the guide portion, while causing the dual-mode vehicle 1, which is in the on-road running mode, to enter the tire-running surface 11 as depicted in FIG. 9A through FIG. 10B and causing the same to run by means of the front tires 3 and the rear tires 4. And, the dual-mode vehicle 1 is caused to enter the track of the broad track range 13 formed on the tire-running surface 11. The track of the broad track range 13 is set to a broader rail gauge dimension $H_{MAX}$ (1159mm) than the standardized rail gauge dimension $H_{STD}$ (1067mm) as depicted in FIG. 8A, and the width dimensions of the front and rear guide wheels 6 and 7 of the dual-mode vehicle 1 to a larger value than normal, corresponding to the broad rail gauge dimension $H_{MAX}$. Therefore, even in a case where the structures of the left and right guide walls are disordered, and the rail gauges are disordered, it becomes possible to easily and smoothly place the front and rear guide wheels 6 and 7 of the dual-mode vehicle 1.

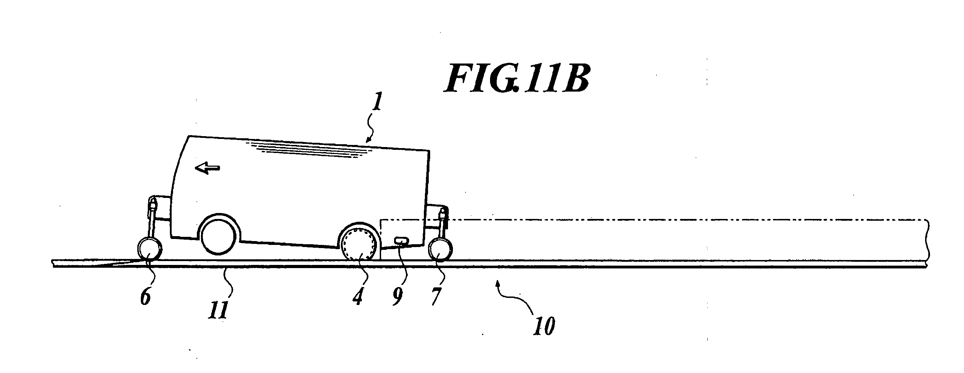

Still further, as depicted in FIG. 11A and FIG. 11B, it is possible to cause the dual-mode vehicle 1, which is placed on a track of the broad track range 13, to enter the rail gauge changing range 14. The rail gauge changing range 14 has a track composed so that the rail gauge dimension gradually changes from the broad rail gauge dimension $H_{MAX}$ (1159mm) to the standardized rail gauge dimension $H_{STD}$ (1067mm), the dual-mode vehicle 1 is gradually guided to a track having a regular rail gauge while running the rail gauge changing range 14. With the structure 10 for converting the running modes, which has the above-described composition, the dual-mode vehicle 1 can shift from the on-road running mode to the on-track running mode while running as depicted in FIG. 12A through FIG. 13B.

In addition, the structure 10 for converting the running modes according to the embodiment described above is to convert the running mode of the dual-mode vehicle 1 from the "on-road running mode" to the "on-track running mode." However, it may be used as a structure for converting the mode from the "on-track running mode" to the "on-road running mode."

That is, the dual-mode vehicle 1 that is in the on-track running mode is caused to enter the inclination surface 15 side of the structure 10 for converting the running modes and the rear tires 4 are brought into contact with the tire-running surface 11, and the front and rear guide wheels 6 and 7 are gradually raised to cause the front tires 3 to be brought into contact with the tire-running surface 11 while gradually causing the vehicle 1 to pass through the rail gauge changing range 14 and the broad rail gauge range 13. Thereby, the running mode of the dual-mode vehicle 1 is converted from the "on-tracking running mode" to the "on-road running mode."

Also, in the dual-mode transportation system according to the embodiment described above, while the dual-mode vehicle 1 that is in the on-road running mode is converted to the on-track running mode via the structure 10 for converting the running modes, the dual-mode vehicle 1 that is in the on-track running mode can be converted to the on-road running mode. Therefore, it is possible to construct a transportation system that enjoys both advantages of a railway transportation system and advantages of a bus transportation system. Where the dual-mode transportation system according to the embodiment is employed, for example, the following effects can be brought about.

(1) Remarkable decrease in vehicle costs, etc.

The vehicle body 2 of a microbus is employed for the dual-mode vehicle 1 of a dual-mode transportation system according to the embodiment, and since it is possible to easily produce the dual-mode vehicle 1 by applying predetermined remodeling to the vehicle body 2, the vehicle cost per vehicle is remarkably inexpensive in comparison with a conventional railway vehicle. Accordingly, since, in a depopulated area where the frequency of use of a railway is remarkably slight, the dual-mode vehicle 1 may be employed instead of a railway vehicle by causing the dual-mode vehicle 1 to run on a track only for the time required using the structure 10 for converting the running modes, and utilizing the same, it is possible to remarkably reduce the costs required for production of the vehicle. Also, since the vehicle body 2 of a microbus is employed for the dual-mode vehicle 1, it is remarkably light in weight in comparison with a conventional railway vehicle. Therefore, by employing the dual-mode vehicle 1 instead of a railway vehicle, it is possible to extend the life expectancy of a track to a large extent, wherein costs required for maintenance of the track can be reduced.

(2) Effects of preventing traffic jams

In traffic jams, the dual-mode vehicle 1 that is on a road can be shifted onto a track via the structures 10 for converting the running modes, which are prepared at predetermined points, the vehicle 1 is caused to run on a track up to a point where no traffic jam occurs, utilizing the track which is not yet used, and again the dual-mode vehicle 1 that is on a track can be shifted onto a road via the structures 10 for converting the running modes, wherein traffic jams can be effectively avoided. In addition, where a road is damaged during a catastrophe and on-road running is made impossible, the dual-mode vehicle 1 can quickly reach a destination, utilizing a track that is not damaged. Therefore, the dual-mode transportation system according to the embodiment becomes very effective in cases where a lifesaving activity and a fire extinguishing activity are required.

(3) Effective utilization of tracks at night

The dual-mode vehicle 1 is caused to enter a track, which railway vehicles do not normally use late at night, via a structure 10 for converting running modes, and is caused to run on a track late at night, and when approaching a destination, the dual-mode vehicle 1 is again shifted onto a road via a structure 10 for converting running mode, and the dual-mode vehicle 1 is caused to run to the final destination. Therefore, the dual-mode vehicle 1 of a dual-mode transportation system according to the embodiment will be made effective as substitute transportation means of night-travel buses and night-travel taxis.

(4) Saving of time and labor to destination

In a case of moving from a house to a desired destination (for example, a school or hospital) using a conventional railway system and a conventional bus transportation system, if the distance between the house and the nearest station or distance between the station and the destination is long, it is necessary to use a bus or to walk for a long time from the house to the station where getting on a train or from the station where getting off the train to the destination. In addition, it is cumbersome to get on and off buses or trains, and waiting time is required when changing from a bus to a train or from a train to a bus. To the contrary, the dual-mode transportation system utilizes a dual-mode vehicle 1 that travels around the vicinity of a house like a bus and permits the dual-mode vehicle 1 to move to a track. And, the dual-mode vehicle 1 that has reached the track is shifted from the on-road running mode to the on-track running mode via the structure 10 for converting running modes, is caused to run on the track like a tramcar, again is shifted from the on-track running mode to the on-road running mode when approaching a destination, and is caused to run on a road to the destination like a bus. Therefore, trouble and labor for changing from a bus to a tramcar or from a tramcar to a bus are no longer required, and the time required for change can be saved, wherein it is possible to remarkably shorten the time required to reach the destination.

(5) Increase in transportation efficiency from airport to sightseeing spot

There are many cases where an airport having a wide site is located far from a station. For this reason, for example, in order for a tourist to move from the airport to a desired sightseeing spot, there are many cases where the following procedures are taken, that is, the tourist moves from the airport to the nearest station of the airport by using a microbus, changes to a tramcar at the nearest station of the airport and moves to the nearest station of the sightseeing spot, and further, the tourist changes to a taxi or a bus at the nearest station of the sightseeing spot and moves to the sightseeing spot. Such an annoyance in transferring becomes a factor in losing the will to use an aircraft (airport) in sightseeing. To the contrary, if such a dual-mode transportation system is employed, a tourist can move to the nearest station of an airport using a dual-mode vehicle 1, can move to the nearest station of a sightseeing spot by the dual-mode vehicle 1 on a track as it is, and can further move from the nearest station of the sightseeing spot to the sightseeing spot on a road. Therefore, the dual-mode transportation system according to the present embodiment can remarkably improve the transportation efficiency of tourists from an airport to a sightseeing spot, and the tourists can reach the sightseeing spot from the airport without any transfer. In addition, the dual-mode transportation system according to the embodiment fosters utilization of aircraft (airport) by tourists, thereby resulting in an increase in the number of tourists utilizing aircraft (airport).

In addition, in the embodiment described above, although the rail gauge dimension $H_{MAX}$ of the broad track range 13 of the structure 10 for converting the running modes is set to 1159mm, and at the same time, the width dimension D of the front and rear guide wheels 6 and 7 of the dual-mode vehicle 1 is set to 172mm, the rail gauge dimension $H_{MAX}$ and the width dimension D may be adequately varied. However, when the dual-mode vehicle 1 runs in the structure 10 for converting the running modes, the width dimension D of the front and rear guide wheels 6 and 7 is set so that the front and rear guide wheels 6 and 7 do not escape from the broad track range 13.

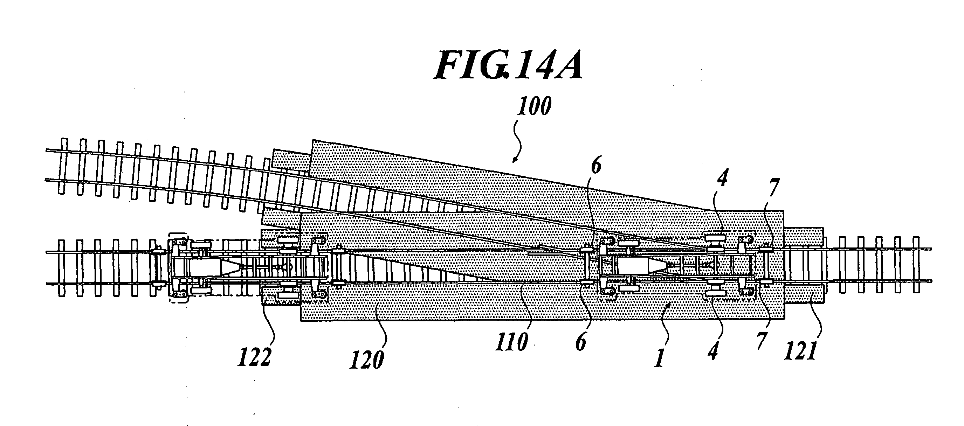

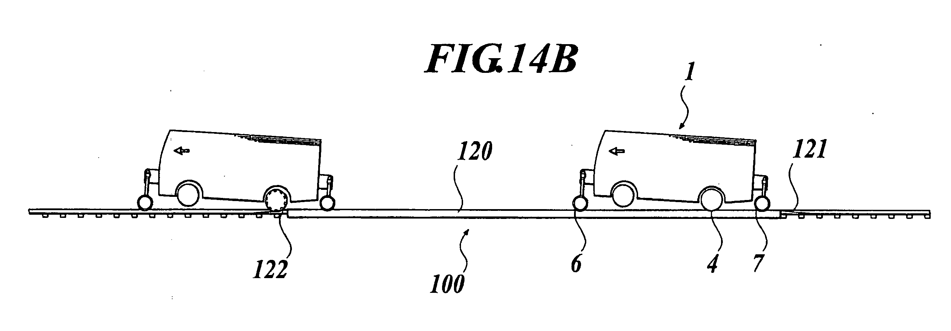

Also, the dual-mode vehicle 1 that is in the on-track running mode is caused to enter a turnout 100 having a track portion 110 and a tire-running surface 120 as depicted in FIG. 14A and FIG. 14B, wherein the direction of on-track running may be changed.

At this time, first, the dual-mode vehicle 1 that is in the on-track running mode is caused to enter forward inclination surfaces 121 secured on the tire-running surface 120 of the turnout 100, the rear tires 4 of the dual-mode vehicle 1 are brought into contact with the tire-running surface 120, and at the same time, the front and rear guide wheels 6 and 7 of the dual-mode vehicle 1 are brought into contact with the track range 110 for track guide. Thus, the dual-mode vehicle 1 that has run on the turnout 100 by means of the front and rear guide wheels 6 and 7 and the rear tires 4 is returned to the on-track running mode after passing through the rearward inclination surface 122 secured on the tire-running surface 120 of the turnout 100. Further, the turnout 100 corresponds to a composite structure according to the invention. When causing the dual-mode vehicle 1 to run on a composite structure (a structure including a track range and a tire-running surface) other than the turnout 100, track guiding based on the front and rear guide wheels 6 and 7 and drive based on the rear tires 4 are carried out as described above.

[Embodiment 2]

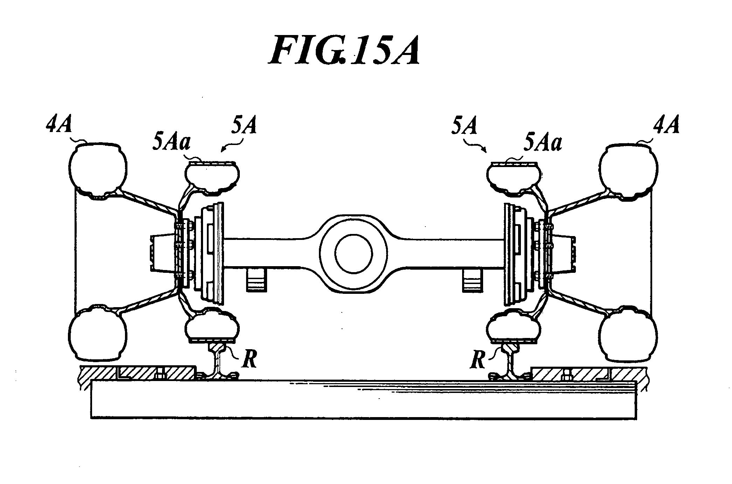

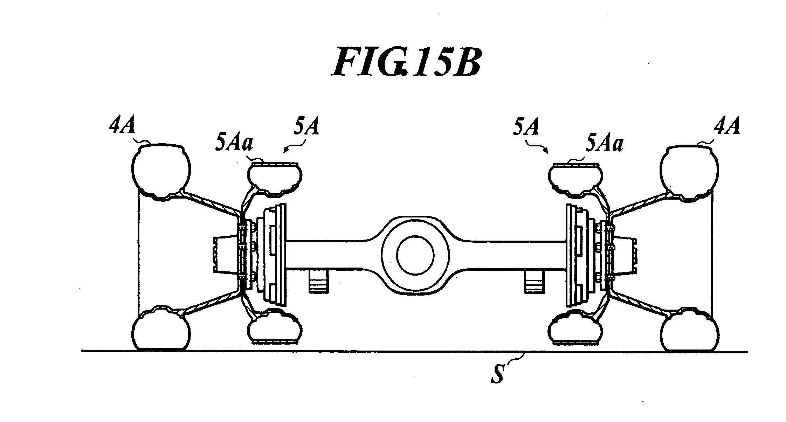

Next, using FIG. 15A and FIG. 15B, a description is given of a dual-mode transportation system according to Embodiment 2 of the invention. The dual-mode transportation system according to the present embodiment is such that the material of the drive wheels 5 of the dual-mode vehicle 1 of the dual-mode transportation system according to Embodiment 1 is changed. All the remaining construction is identical to that of Embodiment 1. Therefore, a description of the construction overlapping Embodiment 1 is omitted.

As depicted in FIG. 15A and FIG. 15B, in the embodiment, the drive wheels 5A are made of comparatively hard synthetic rubber. And, the diameter dimension of the drive wheels 5A is set to be substantially equivalent to the diameter dimension of the rear rubber tires 4A, or is set to be a smaller figure than the diameter dimension of the rear rubber tires 4A. Also, as depicted in FIG. 15A and FIG. 15B, a flat wheel tread 5Aa whose tread gradient is substantially 0° is formed on the entire area in the width direction of the drive wheels 5A.

Thus, in the embodiment, since synthetic rubber-made drive wheels 5A which are soft in comparison with iron wheels are employed, there are few cases where the road surface S is damaged even if the drive wheels 5A are brought into contact with the road surface S during running on a road as depicted in FIG. 15B. Further, since the drive wheels 5A made of synthetic rubber may be slightly deformed to the rails R of a track depicted in FIG. 15A and are brought into contact with the rails R, a friction force between the drive wheels 5A and the rails R is increased, wherein it is possible to achieve on-track running at a high speed. In addition, since the synthetic rubber that composes the drive wheels 5A is comparatively hard, it is possible to securely support the weight of the vehicle during running on a track.

Still further, in the embodiment, an example is described, in which the drive wheels 5A for running on a track are made of synthetic rubber. However, the drive wheels 5A may be made of synthetic resin. Since drive wheels 5A made of synthetic resin are soft in comparison with iron wheels, there are few cases where the road surface S is damaged even if the drive wheels 5A are brought into contact with the road surface S during running on a road. In addition, since the drive wheels 5A made of synthetic resin may be slightly deformed to the rails R of a track and are brought into contact with the rails R, a friction force between the drive wheels 5A and the rails R is increased, wherein it is possible to achieve on-track running at a high speed. Also, where the drive wheels 5A are made comparatively hard, it is possible to securely support the weight of the vehicle during running on a track.

[Embodiment 3]

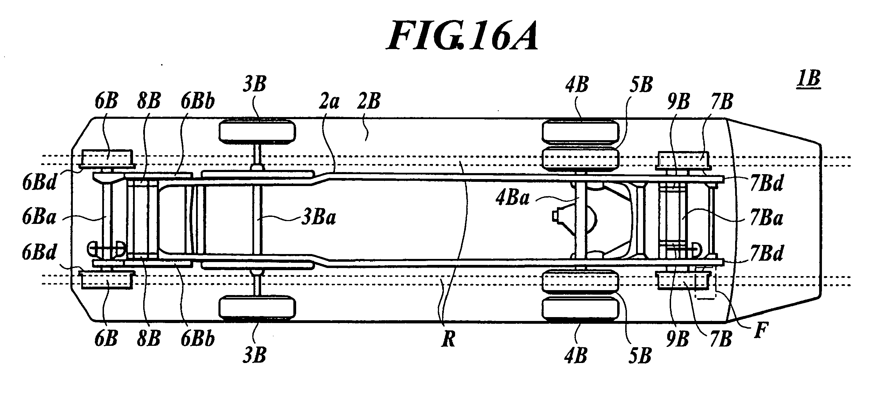

Subsequently, using FIG. 16A through FIG. 18, a description is given of a dual-mode transportation system according to Embodiment 3 of the invention. A dual-mode transportation system according to the present embodiment is such that the dual-mode vehicle of the dual-mode transportation system according to Embodiment 1 is altered. The remaining construction is identical to that of Embodiment 1. Therefore, a description is omitted of compositions other than the dual-mode vehicle.

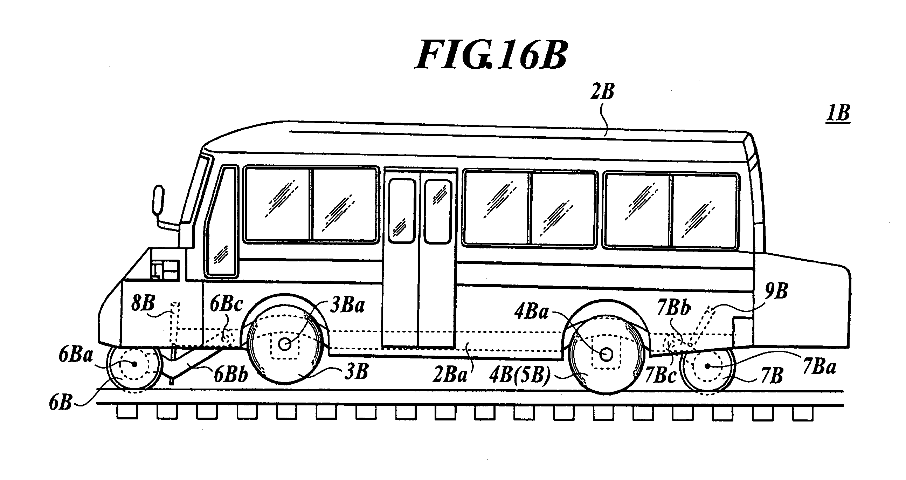

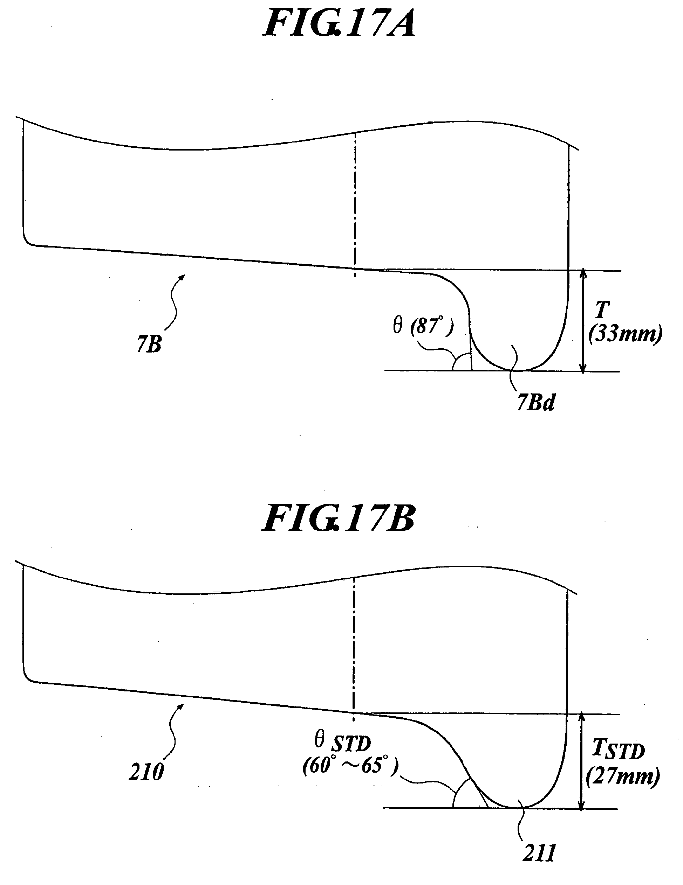

First, using FIG. 16A through FIG. 17B, a description is given of composition of a dual-mode vehicle 1B according to the embodiment. The dual-mode vehicle 1B is composed, as depicted in FIG. 16A and FIG. 16B, of a vehicle body 2B of a microbus vehicle, front tires 3B and rear tires 4B rotating around axles 3Ba and 4Ba, which are provided at the front and rear parts of the vehicle body 2B, rubber-made drive wheels 5B for running on a track, which are provided inside of the rear tires 4B, front guide wheels 6B and rear guide wheels 7B for running on a track, which can be raised and lowered and are provided at the front and rear parts of the vehicle body 2B, a vehicle speed sensor for detecting the running speed of the vehicle, a revolution speed sensor for detecting the revolution speed of the rubber-made drive wheels 5B, and a control unit for controlling the loads of the rubber-made drive wheels 5B and the rear guide wheels 7B, etc.

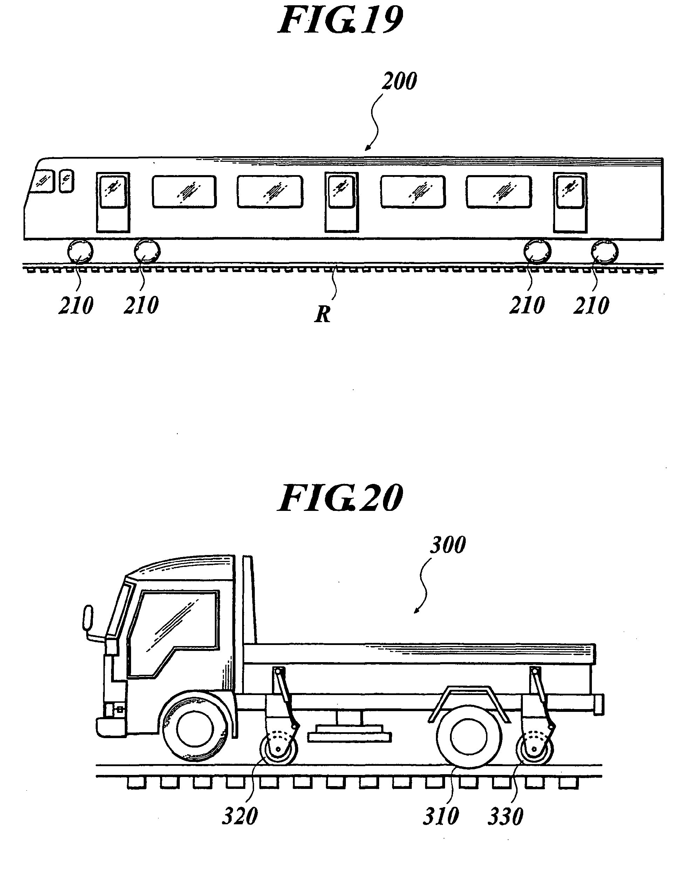

In addition, illustration of the vehicle speed sensor, the revolution speed sensor and the control unit is omitted. Further, it is assumed that the total weight of the dual-mode vehicle 1B according to the embodiment is approximately 6 tons while the total weight of a conventional railway vehicle 2000 depicted in FIG. 19 is approximately 40 tons.

The front tires 3B are axially supported one by one at the left and right sides of the front axle 3Ba attached to the chassis 2Ba of the vehicle body 2B, and support the load of the vehicle body 2B along with the rear tires 4B when running on a road. The direction of the front tires 3B may be changed by a steering device (not illustrated) connected to the handle of the driver's seat of the vehicle body 2B.

As depicted in FIG. 16A and FIG. 16B, the rear tires 4B are axially supported one by one at the left and right sides of the rear axle 4Ba attached to the chassis 2Ba of the vehicle body 2B. The rear tires 4B support the load of the vehicle body 2B along with the front tires 3B when running on a road, and at the same time, are driven by an engine (not illustrated) and a power transmission device and function as drive wheels when running on a road.

The rubber-made drive wheels 5B being fixed inside the rear tires 4B, are driven by an engine (not illustrated) and a power transmission device like the rear tires 4B and rotate around the rear axle 4a. The rubber-made drive wheels 5B are composed of a comparatively hard synthetic rubber, and generate drive forces by being brought into contact with the upper surface of the rails R, which compose a track, as depicted in FIG. 16A and FIG. 16B, when running on a track.

The front guide wheels 6B and the rear guide wheels 7B are made of metal such as iron, and are provided one by one at the left and right sides. The left and right front guide wheels 6B and rear guide wheels 7B are, respectively, connected to each other by means of the front axle 6Ba and the rear axle 7Ba as depicted in FIG. 16A. Also, the front guide wheels 6B and the rear guide wheels 7B are rotatably attached to the front and rear parts of the chassis 2Ba of the vehicle body 2B via the front and rear axles 6Ba and 7Ba, arms 6Ba and 7Bb and revolution axes 6Bc and 7Bc. And, these front guide wheels 6B and rear guide wheels 7B are composed so as to turn upward and downward by elongation and contraction of hydraulic actuators 8B and 9B.

The front guide wheels 6B and the rear guide wheels 7B are turned upward by contraction of the hydraulic actuators 8B and 9B when running on a road, and are fixed upward by the front tires 3B and the rear tires 4B. On the other hand, the front guide wheels 6B and the rear guide wheels 7B are turned downward by elongation of the hydraulic actuators 8B and 9B, as depicted in FIG. 16B, when running on a track, and are brought into contact with the rails R of a track. When running on a track, the front guide wheels 6B supports the forward load of the vehicle body 2B and the rear guide wheels 7B support a part of the rearward load of the vehicle body 2B.

Further, the front guide wheels 6B and the rear guide wheels 7B are provided with tread gradients and flanges 6Bd and 7Bd as depicted in FIG. 16A, and function as a track guide. Therefore, even if the rubber-made drive wheels 5B are not provided with tread gradients and flanges, the dual-mode vehicle 1B can securely run on a track along the rails R. In addition, FIG. 17A depicts an enlarged view of the flange 7Bd (Portion F of FIG. 16A) of the rear guide wheels 7B. Also, FIG. 17B is an enlarged view depicting the flange 211 of a vehicle 210 of a conventional railway vehicle 200 depicted in FIG. 19.

The angle (flange angle) θ of the flanges 6Bd and 7Bd of the front guide wheels 6B and the rear guide wheels 7B is set to approximately 87° as depicted in FIG. 17. The value is a larger value than the standardized flange angle $\theta_{STD}$ (approximately 60° through 65°) of the conventional wheels 210 depicted in FIG. 17B. Also, the height (flange height) T of the flanges 6Bd and 7Bd of the front guide wheels 6B and the rear guide wheels 7B is set to approximately 33mm as depicted in FIG. 17A. The value is a larger value than the standardized flange height $T_{STD}$ (approximately 27mm) of the conventional wheels 210 depicted in FIG. 17B.

The flange angle θ (approximately 87°) of the front guide wheels 6B and the rear guide wheels 7B is calculated with the derailment limit value of the dual-mode vehicle taken into consideration. Hereinafter, a description is given of a method of calculating the flange angle θ.

Generally, in a railway vehicle 200 as depicted in FIG. 19, the derailment coefficient (Q/P) of the railway vehicle 200 and the derailment limit value (Q/P)c of a wheel 210 are calculated, and the running stability is evaluated on the basis of whether the derailment coefficient (Q/P) exceeds the derailment limit value (Q/P) c.

Herein, the derailment coefficient (Q/P) is a value obtained by dividing the lateral force Q (a force by which the wheel 210 pushes the rail R in the axle direction) by the wheel load P (a force by which the wheel 210 pushes the rail R in the perpendicular direction). Also, the derailment limit value $(Q/P)_c$ is calculated by the Nadal equation as described below, wherein μ is a friction coefficient between the wheel 210 and the rail R.

$$(Q/P)_c = (\tan\theta-\mu)/(1+\mu\tan\theta).$$

If the derailment limit value $(Q/P)_c$ is obtained by substituting the friction coefficient μ (0.3) and the standardized flange angle 9 (65°) of the wheel 210 of the railway vehicle 200 in the Nadal equation, "$(Q/P)_c = 0.94$" is obtained. Where the derailment coefficient (Q/P) of the railway vehicle 200 does not exceed the derailment limit value 0.94 (for example, in cases of "Q=4.5" and "P=5"), it is evaluated that the running stability is favorable.

To the contrary, in the dual-mode vehicle 1B according to the embodiment, the rearward load of the vehicle body 2B is supported by both the rear guide wheels 7B and the rubber-made drive wheels 5B. At present, in view of experience, the load sharing ratio is established so that 40% of the rearward load of the vehicle body 2B in a stationary state of a vehicle is supported by the rear guide wheels 7B (that is, the wheel load P of the rear guide wheels 7B becomes 4/10 times the rearward load of the vehicle body 2B).

Therefore, the derailment coefficient at the rearward part of the dual-mode vehicle 1B becomes 2.5 times (10/4 times) the derailment coefficient of the railway vehicle 200. Thus, since the derailment coefficient at the rearward part of the vehicle body of the dual-mode vehicle 1B becomes 2.5 times the derailment coefficient of the conventional railway vehicle 200, it is inadequate that the running stability is evaluated using the above-described derailment limit value (0.94) calculated by using the Nadal equation.

Accordingly, in the embodiment, it is determined that the value (2.34) obtained by multiplying the above-described derailment limit value (0.94) 2.5 times is set as the derailment limit value. And, by substituting the new derailment limit value (2.34) and the friction coefficient μ (0.3) in the Nadal equation, the flange angle θ (87°) is calculated, and the flange angle θ (87°) is employed for the front guide wheels 6B and the rear guide wheel 7B.

Also, the flange height T(approximately 33mm) of the front guide wheels 6B and the rear guide wheels 7B is calculated with the weight of the dual-mode vehicle 1B taken into consideration. Hereinafter, a description is given of the background of having set the flange height as such.

Generally, since the total weight is large to be 40 tons in the railway vehicle 200 as depicted in FIG. 19, the support load (wheel load P) of one of the wheels 210 becomes large to be approximately 5 tons. Therefore, since the chronological wearing amount of the wheel tread of the wheels 210 is increased, the flange height will be relatively increased chronologically. As the flange height is thus increased, it becomes difficult for the wheels 210 to escape from the rails R, wherein the running stability is improved. However, if the flange height of the wheels 210 becomes excessively high, inconvenience such as difficulty in passing through a turnout is brought about. Accordingly, the flange height was set to approximately 27mm in the conventional wheels 210.

To the contrary, since the total weight of the dual-mode vehicle 1B according to the present embodiment is approximately 6 tons and is comparatively light, the support loads (wheel loads) of the front guide wheels 6B and the rear guide wheels 7B are decreased. Therefore, since the chronological wearing amount of the wheel treads of the front guide wheels 6B and the rear guide wheels 7B becomes remarkably small, there is no case where the flange height thereof is chronologically increased to such a degree that the wheels cannot pass through a turnout. For this reason, in the embodiment, the flange height thereof is set to approximately 33mm, thereby improving the running stability.

The vehicle speed sensor detects a running speed of the dual-mode vehicle 1B when running on a track. In the embodiment, a guide wheel revolution speed sensor, which is incorporated in the front guide wheels 6B and the rear guide wheels 7B, respectively, is employed as the vehicle speed sensor. The running speed of the dual-mode vehicle 1B in running on a track is calculated on the basis of revolution speeds of the front and rear guide wheels, which are detected by the guide wheel revolution speed sensors. The speed information detected by the vehicle speed sensor is transmitted to the control unit, and is used to detect an idle running state of the rubber-made drive wheels 5B. In addition, GPS and INS, etc., may be adopted as the vehicle speed sensor.

The revolution speed sensor detects the revolution speed of the rubber-made drive wheels 5B when running on a track. In the embodiment, the running speed of the dual-mode vehicle 1B in running on a track is calculated on the basis of the revolution speed of the rubber-made drive wheels 5B, which is detected by the revolution speed sensor. The speed information calculated using such a revolution speed sensor is transmitted to a control unit and is used to detect an idle running state of the rubber-made drive wheels 5B.

The control unit is a wheel load control unit in the invention, and is composed of a CPU for carrying out integrated control of the entire devices of the dual-mode vehicle 1B and ROMs in which various types of control programs and control data are stored. The control unit judges an idle running state of the rubber-made drive wheels 5B on the basis of the on-track running speed of a vehicle, which has been detected by the vehicle speed sensor, and the revolution speed of the rubber-made drive wheels 5B in running on a track, which has been detected by the revolution speed sensor. Based on the result of judgement, the wheel loads of the rubber-made drive wheels 5B and the rear guide wheels 7B are controlled.

Describing in detail, the CPU of the control unit compares the on-track running speed of a vehicle, which has been detected by the vehicle speed sensor (hereinafter called a "detection speed"), with the on-track running speed (hereinafter called a "calculated speed") of a vehicle, which has been calculated from the revolution speed of the rubber-made drive wheels 5B, detected by the revolution speed sensor, in running on a track. And, while, when a difference between the detection speed and the calculated speed is a predetermined threshold value or less, the CPU judges that the rubber-made drive wheels 5B are not in an idle running state, the CPU judges, when the difference between the detection speed and the calculated speed exceeds the predetermined threshold value, that the rubber-made drive wheels 5B are in an idle running state. That is, the CPU is means for judging idle running in the invention.

Also, where the CPU of the control unit determines that the rubber-made drive wheels 5B are in an idle running state, the CPU executes a program for improving drive performance in the ROM, drives the hydraulic actuator 9B for contraction, and reduces the wheel load of the rear guide wheels 7B, wherein the wheel load of the rubber-made drive wheels 5B is relatively increased. That is, the CPU and the program for improving drive performance are means for improving drive performance in the invention.

In addition, when the CPU of the control unit determines that the rubber-made drive wheels 5B are not in an idle running state, the CPU executes a program for improving running stability in the ROM, drives and elongates the hydraulic actuators 9B, and increases the wheel loads of the rear guide wheels 7B, wherein the wheel loads of the rubber-made drive wheels 5B are relatively reduced. That is, the CPU and the program for improving running stability are means for improving the running stability in the invention.

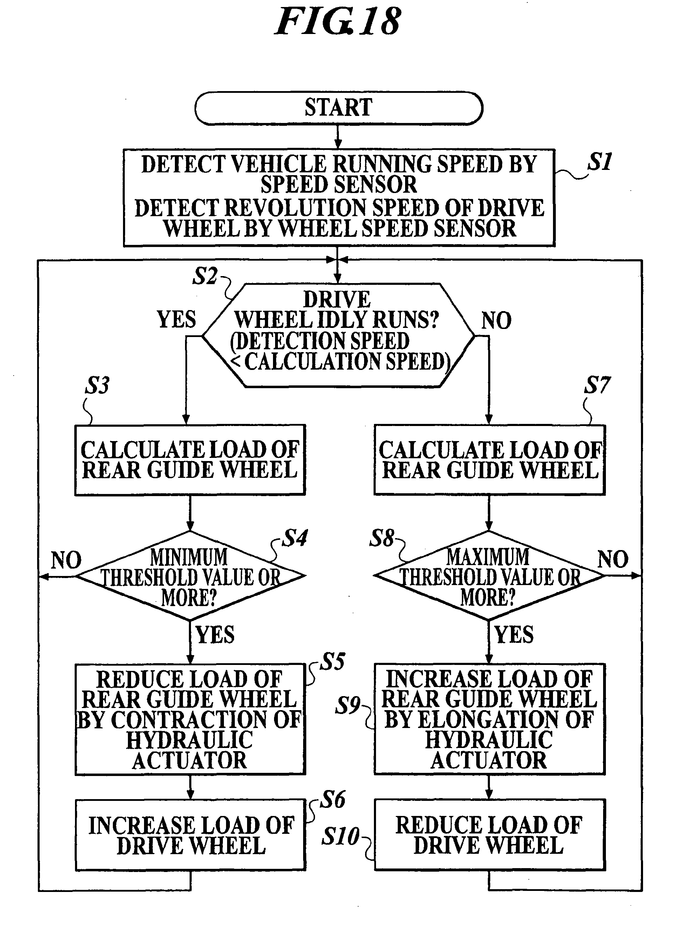

Next, using FIG. 16A, FIG. 16B and FIG. 18, a description is given of a method for controlling the wheel load, when running on a track, of the dual-mode vehicle 1 according to the embodiment.

First, in order to accomplish on-track running of the dual-mode vehicle 1B, the hydraulic actuators 8B and 9B are elongated as depicted in FIG. 16A and FIG. 16B to shift down the front guide wheels 6B and the rear guide wheels 7B, wherein the front guide wheels 6B and the rear guide wheels 7B are brought into contact with the rails R of a track. Further, the rubber-made drive wheels 5B secured inside the rear tires 4B are brought into contact with the rails R of a track as depicted in FIG. 16A and FIG. 16B. In a stationary state of the vehicle, the forward load of the vehicle body 2B is supported by the front guide wheels 6B, and approximately 60% of the rearward load of the vehicle body 2B is supported by the rubber-made drive wheels 5B. In addition, approximately 40% of the rearward load of the vehicle is supported by the rear guide wheels 7B.

Next, the rubber-made drive wheels 5B are driven to generate a drive force by actuating an engine of the dual-mode vehicle 1B, and on-track running is commenced. As the dual-mode vehicle 1B commences on-track running, the on-track running speed of the vehicle is detected by the vehicle speed sensor, and at the same time, the revolution speed of the rubber-made drive wheels 5B is detected by the revolution speed sensor. Then, based on the revolution speed, the on-track running speed of the vehicle is calculated (Speed detecting step:S1). The speed information detected (calculated) in the speed detecting step S1 is transmitted to the control unit.

Next, as depicted in FIG. 18, the control unit compares the on-track running speed (detection speed) of a vehicle, which has been detected by the vehicle speed sensor, with the on-track running speed (calculated speed) of a vehicle, which has been calculated from the revolution speed, detected by the revolution speed sensor, of the rubber-made drive wheels 5B when running on a track, and the CPU judges whether or not the rubber-made drive wheels 5B are in an idle running state (Idle running judging step: S2). At this time, while, when a difference between the detection speed and the calculated speed is a predetermined threshold value or less, the control unit determines that the rubber-made drive wheels 5B are not in an idle running state, the control unit determines, when the difference between the detection speed and the calculated speed exceeds the predetermined threshold value, that the rubber-made drive wheels 5B are in an idle running state.

Where it is judged in the idle running judging step S2 that the rubber-made drive wheels 5B are in an idle running state, the control unit calculates the wheel loads of the rear guide wheels 7B as depicted in FIG. 18 (Wheel load calculating step: S3), and further judges whether the calculated wheel load of the rear guide wheels 7B is the minimum threshold value or more (Wheel load lower limit judging step:S4). Herein, the "Minimum threshold value" of the wheel load of the rear guide wheels 7B indicates a value of the wheel load by which a possibility for the rear guide wheels 7B to escape from the rails is remarkably high, and it may be adequately set by referencing to the curvature ratio of a track in addition to the weight of the dual-mode vehicle 1B and the running speed thereof.

Where it is judged in the wheel load lower limit judging step S4 that the wheel load of the rear guide wheels 7B is less than a predetermined minimum threshold value, the control unit judges that there is an external factor such as the center of gravity of the vehicle body 2B being shifted forward and the rearward load of the vehicle body 2B being reduced, and the control unit executes no control as depicted in FIG. 18 and returns to the idle running judging step S2. On the other hand, where it is judged in the wheel load lower limit judging step S4 that the wheel load of the rear guide wheels 7B is a predetermined minimum threshold value or more, the control unit drives and contracts the hydraulic actuator 9B as depicted in FIG. 18, thereby reducing the wheel load of the rear guide wheels 7B (Guide wheel load reducing step: S5). By thus reducing the wheel load of the rear guide wheels 7B, the wheel load of the rubber-made drive wheels 5B is relatively increased (Drive wheel load increasing step: S6).

After the drive wheel load increasing step S6, the control unit again judges whether or not the rubber-made drive wheels 5B are in an idle running state (Idle running judging step: S2) as depicted in FIG. 18. And, where it is judged in the idle running judging step S2 that the rubber-made drive wheels 5B are still in an idle running state, the wheel load calculating step S3, wheel load lower limit judging step S4, guide wheel load reducing step S5 and drive wheel load increasing step S6 are carried out again. These steps from the wheel load calculating step S3 through the drive wheel load increasing step S6 compose the process for improving drive performance in the invention.

On the other hand, where it is judged in the idle running judging step S2 that the rubber-made drive wheels 5B are not in an idle running state, the control unit calculates the wheel load of the rear guide wheels 7B as depicted in FIG. 18 (Wheel load calculating step: S7), and it is judged whether or not the calculated wheel load of the rear guide wheels 7B is the maximum threshold value or less (Wheel load upper limit judging step S8). Herein, the "Maximum threshold value" of the wheel load of the rear guide wheels 7B means the wheel load of the rear guide wheels 7B, by which a possibility for the rubber-made drive wheels 5B to run idle is remarkably high.

Where it is judged in the wheel load upper limit judging steps S8 that the wheel load of the rear guide wheels 7B exceeds the maximum threshold value, the control unit judges that the possibility for the rubber-made drive wheels to run idle is high, and the process is returned to the idle running judging step S2 without making any control. On the other hand, where it is judged in the wheel load upper limit judging step S8 that the wheel load of the rear guide wheels 7B is the maximum threshold value or less, the control unit increases the wheel load of the rear guide wheels 7B by driving to elongate the hydraulic actuator 9B as depicted in FIG. 18 (Guide wheel load increasing step: S9). Thus, by increasing the wheel load of the rear guide wheels 7B, the wheel load of the rubber-made drive wheels is relatively reduced (Drive wheel load reducing step: S10).

After the drive wheel load reducing step S10, the control unit again judges whether or not the rubber-made drive wheels 5B are in an idle running state (Idle running judging step: S2) as depicted in FIG. 18. And, where it is again judged in the idle running judging step S2 that the rubber-made drive wheels 5B are not in an idle running state, the wheel load calculating step S7, wheel load upper limit judging step S8, guide wheel load increasing step S9 and drive wheel load reducing step S10 are again carried out. These steps from the wheel load calculating step S7 to the drive wheel load reducing step S10 compose a process for improving the running stability in the invention.

Where the control unit of the dual-mode vehicle 1B according to the embodiment described above judges that the rubber-made drive wheels 5B are in an idle running state, the control unit reduces the wheel load of the rear guide wheels 7B so that the wheel load does not fall below a predetermined minimum threshold value, wherein it is possible to increase the wheel load of the rubber-made drive wheels 5B while preventing the rear guide wheels 7B from escaping from the rails (Idle running judging step S2 to drive wheel load increasing step S6). Therefore, even where the rubber-made drive wheels 5B are in an idle running state, it is possible to quickly shift the drive wheels 5B to a normal drive state (non-idle running state). Therefore, the drive performance can be remarkably improved when running on a track.

Where the control unit of the dual-mode vehicle 1B according to the embodiment described above judges that the rubber-made drive wheels 5B are not in an idle running state, the control unit increases the wheel load of the rear guide wheels 7B so that the wheel load does not exceed a predetermined maximum threshold value, wherein it is possible to reduce the support load of the rubber-made drive wheels 5B while preventing the rubber-made drive wheels 5B from idle running (Idle running judging step S2 through drive wheel load reducing step S10). Therefore, it is possible to improve the running stability while maintaining a normal drive state (Non-idle running state).

Also, in the dual-mode vehicle 1B according to the embodiment described above, as depicted in FIG. 17A and FIG. 17B, the flange angle θ of the front guide wheels 6B and the rear guide wheels 7B is set to a larger value (approximately 87°) than the standardized flange angle $θ_{STD}$ (approximately 60° through 65°) of the conventional wheels 210. In addition, as depicted in FIG. 17A and FIG. 17B, the flange height T of the front guide wheels 6B and the rear guide wheels 7B is set to a larger value (approximately 33mm) than the standardized flange height $T_{STD}$ (approximately 27mm) of the conventional wheels 210. Accordingly, even in cases where the wheel loads of the front guide wheels 6B and the rear guide wheels 7B are reduced, it is possible to effectively prevent the wheels from escaping from the rails, and to improve the running stability.

Further, in the embodiment described above, such an example is described, in which when the dual-mode vehicle 1B runs on a track, the rubber-made drive wheels 5B secured inside the rear tires 4B are brought into contact with the rails R of a track to generate a drive force, wherein the wheel load of the rubber-made drive wheels 5B and the wheel load of the rear guide wheels 7B adjacent to the rubber-made drive wheels 5B are controlled. However, the rubber-made drive wheels may be provided inside the front tires 3B, and the rubber-made drive wheels may be brought into contact with the rails R of a track to generate to drive force. In such a case, by the control unit controlling the wheel load of the rubber-made drive wheels secured inside the front tires 3B and the wheel load of the front guide wheels 6B adjacent to the rubber-made drive wheels 5B, idle running of the rubber-made drive wheels can be prevented, and at the same time, escape of the front guide wheels 6B can also be prevented from occurring, wherein it is possible to remarkably improve the drive performance and the running stability when running on a track.

In addition, in the embodiment described above, such an example is described, in which when the dual-mode vehicle 1B runs on a track, the rubber-made drive wheels 5B secured inside the rear tires 4B are brought into contact with the rails R of a track and a drive force is generated. However, iron wheels for running on a track may be provided instead of the rubber-made drive wheels 5B, and the iron wheels may be brought into contact with the rails R of a track to generate a drive force. In such a case, by the control unit controlling the wheel load of the iron wheels being the drive wheels and the wheel load of the rear guide wheels 7B adjacent to the iron wheels, idle running of the iron wheels can be prevented, and escape of the rear guide wheels 7B can be prevented from escaping from the rails.

Further, in the embodiment described above, such an example is described, in which the flange angle θ of the front guide wheels 6B of the dual-mode vehicle 1B and the rear guide wheels 7B thereof is set to "approximately 87°". However, the value of the flange angle θ may be adequately changed in compliance with the escape limit value and the friction coefficient. Also, in the embodiment described above, the flange height T of the front guide wheels 6B of the dual-mode vehicle 1B and the rear guide wheels 7B thereof is set to "approximately 33mm". However, the flange height T may be adequately changed in compliance with the weight of the dual-mode vehicle 1B and the material of the guide wheels.

Still further, in the embodiment described above, such an example is described, in which a method for controlling the wheel loads according to the invention is applied to a dual-mode vehicle that has under development at present. However, the method for controlling wheel loads according to the invention may be applicable to a track-road vehicle 300 conventionally proposed as depicted in FIG. 20.

For example, a control unit similar to the control unit of the dual-mode vehicle 1B according to the embodiment is incorporated in the track-road vehicle 300 depicted in FIG. 20, wherein the control unit judges whether or not the rubber-made drive wheels 310 of the track-road vehicle 300 is in an idle running state, and where it is judged that the rubber-made drive wheels 310 are in an idle running state, the wheel load of the rear guide wheels 330 is reduced so that the wheel load does not fall below a predetermined minimum threshold value, wherein it is possible to increase the wheel load of the rubber-made drive wheels 310 while preventing the rear guide wheels 330 from escaping from the rails. Therefore, it becomes possible to remarkably improve the drive performance of the track-road vehicle 300 when it runs on a track.

In addition, where it is judged that the rubber-made drive wheels 310 are not in an idle running state, the wheel load of the rear guide wheels 330 is increased so that it does not exceed a predetermined maximum threshold value, wherein it is possible to reduce the support load of the rubber-made drive wheels 310 while preventing the rubber-made drive wheels 310 from idle running. Therefore, it is possible to improve the running stability of the track-road vehicle 300 while maintaining a normal drive state (non-idle running).

Furthermore, the flange angle of the front guide wheels 320 of the track-road vehicle 300 depicted in FIG. 20 and the rear guide wheels thereof is set to a larger value than the standardized flange angle $\theta_{STD}$ of the conventional vehicle, and the flange height of the front guide wheels 320 of the track-road vehicle 300 and the rear guide wheels 330 thereof is set to a larger value than the standardized flange height $T_{STD}$ of the conventional vehicle, whereby it is possible to effectively prevent the wheels from escaping from the rails and to improve the running stability.

Industrial Applicability

As described above, the dual-mode vehicle and structure for converting running modes according to the invention favorably contribute to construction of a "Dual-mode transportation system" that is a novel transportation system capable of making use of advantages of both a railway vehicle and a bus. In addition, the method for running the dual-mode vehicle and method for controlling the wheel loads according to the invention contribute to smooth operation of the dual-mode vehicle.

Description of the Reference Numerals

| 1, 1B | Dual-mode vehicles |
|---|---|
| 2, 2B | Vehicle body |
| 3 | Front tires |
| 4, 4A | Rear tires |
| 4a | Rear axles |
| 5, 5A | Drive wheels |
| 5a | Wheel tread |
| 5B | Rubber-made drive wheels |
| 6, 6B | Front guide wheels |
| 7, 7B | Rear guide wheels |
| 10 | Structure for converting running modes |
| 11 | Tire-running surface |
| 12 | Left and right guide walls (Guiding range) |
| 13 | Broad track range |
| 14 | Rail gauge changing range |
| 100 | Turnout (Composite structure) |
| 110 | Track range |
| 120 | Tire-running surface |
| D | Width dimension of front and rear guide wheels |
| $D_{STD}$ | Standardized width dimension of on-track running wheels |
| $H_{MAX}$ | Broad rail gauge dimension of broad track range |
| $H_{STD}$ | Standardized rail gauge dimension |
| T | Flange height of rear guide wheels |
| $T_{STD}$ | Standardized flange height |
| $\theta$ | Flange angle of rear guide wheels |
| $\theta_{STD}$ | Standardized flange angle |
| S2 | Idle running judging step |
| S3 | Wheel load calculating step (Drive performance improving step) |
| S4 | Wheel load lower limit judging step (Drive performance improving step) |
| S5 | Guide wheel load reducing step (Drive performance improving step) |
| S6 | Drive wheel load increasing step (Drive performance improving step) |
| S7 | Wheel load calculating step (Running stability improving step) |
| S8 | Wheel load upper limit judging step (Running stability improving step) |
| S9 | Guide wheel load increasing step (Running stability improving step) |
| S10 | Drive wheel load reducing step (Running stability improving step) |

**Claims**

1. A dual-mode vehicle comprising:

front and rear tires attached to front and rear parts of the vehicle via axles;
drive wheels for running on a track, which are attached to the same axles as those of the rear tires; and
front and rear guide wheels, which are made to be raised and provided at the front and rear parts of the vehicle, for running on the track, wherein the rear guide wheels are disposed adjacent to the drive wheels, and
the dual-mode vehicle further comprises a wheel load controlling unit for controlling the wheel loads of the drive wheels and the rear guide wheels, the wheel load controlling unit including:

idle running judging means for judging whether or not the drive wheels are running idle;

drive performance improving means for increasing the wheel load of the drive wheels, while preventing the rear guide wheels from escaping from the track, by reducing the wheel load of the rear guide wheels so that the wheel load thereof does not fall below a predetermined minimum threshold value where it is judged by the idle running judging means that the drive wheels are running idle; and

running stability improving means for reducing the wheel load of the drive wheels, while preventing the drive wheels from idle running, by increasing the wheel load of the rear guide wheels so that the wheel load thereof does not exceed a predetermined maximum threshold value where it is judged by the idle running judging means that the drive wheels are not idle running.

2. The dual-mode vehicle according to Claim 1, wherein the drive wheels are made smaller in diameter than the rear tires and have a substantially flat wheel tread formed in the entire area of the width direction thereof.

3. The dual-mode vehicle according to Claim 1 or 2, wherein the drive wheels are composed of a rubber material.

4. The dual-mode vehicle according to Claim 1 or 2, wherein the drive wheels are composed of a synthetic resin material.

5. The dual-mode vehicle according to any one of Claims 1 to 4, wherein the front and rear guide wheels are composed so that the width dimensions thereof are set to a larger value than the standardized width dimension of wheels for running on a track so as to correspond to a predetermined broad track range having a broader rail gauge dimension than the standardized rail gauge dimension.

6. The dual-mode vehicle according to any one of Claims 1 to 5, wherein the front and rear guide wheels are composed so that the flange angle thereof is set to a larger value than the standardized flange angle of wheels for running on a track.

7. The dual-mode vehicle according to any one of Claims 1 to 6, wherein the front and rear guide wheels are composed so that the flange height is set to a larger value than the standardized flange height of wheels for running on a track.

8. A method for running a dual-mode vehicle where the dual-mode vehicle according to any one of Claims 1 to 7 runs on a composite structure including a track range and a tire-running surface; wherein track guiding is carried out by bringing the front and rear guide wheels into contact with the track range of the composite structure, and a drive force is generated by bringing the rear tires into contact with the tire-running surface of the composite structure.

9. A method for controlling wheel loads of the drive wheels of the dual-mode vehicle according to any one of Claims 1 to 7 and the rear guide wheels thereof, comprising:

an idle running judging step for judging whether or not the drive wheels are running idle;

a drive performance improving step for increasing the wheel load of the drive wheels, while preventing the rear guide wheels from escaping from the rails, by reducing the wheel load of the rear guide wheels so that the wheel load thereof does not fall below a predetermined minimum threshold value where it is judged in the idle running judging step that the drive wheels are running idle; and

a running stability improving step for reducing the wheel load of the drive wheels, while preventing the drive wheels from idle running, by increasing the wheel load of the rear guide wheels so that the wheel load thereof does not exceed a predetermined maximum threshold value where it is judged in the revolution state detecting step that the drive wheels are not in an idle running.

10. A structure for converting running modes, by which a running mode of the dual-mode vehicle according to any one of Claims 1 to 7 is converted from an on-road running mode to an on-track running mode, comprising:

a tire-running surface on which the dual-mode vehicle is caused to run by means of the front and rear tires;

a guiding range for guiding the dual-mode vehicle to a predetermined track;

a broad track range having a broader rail gauge dimension than the standardized rail gauge range; and

a rail gauge changing range constructed to the broad track range, the rail gauge of which gradually changes from the broad rail gauge dimension to the standardized rail gauge dimension

11. A dual-mode transportation system, comprising:

a dual-mode vehicle according to any one of Claims 1 to 7,
a road on which the dual-mode vehicle can run by means of the front tires and the rear tires;
a track including the standardized rail gauge dimension in which the dual-mode vehicle can run by means of the front and rear guide wheels and the drive wheels; and
a structure for converting running modes according to Claim 10, which is disposed between the road and the track;
wherein while the dual-mode vehicle that is in an on-road running mode is converted to an on-track running mode by means of the structure for converting the running modes, the dual-mode vehicle that is in an on-track running mode is converted to the on-road running mode.

**Patentansprüche**

1. Doppelbetriebsart-Fahrzeug, das Folgendes umfasst:

Vorder- und Hinterreifen, die über Achsen an dem vorderen bzw. dem hinteren Teil des Fahrzeugs angebracht sind;
Antriebsräder zum Fahren auf einer Schiene, die an denselben Achsen angebracht sind wie diejenigen der Hinterreifen; und
vordere und hintere Führungsräder, die ausgelegt sind, um angehoben zu werden, und die an dem vorderen und dem hinteren Teil des Fahrzeugs zum Fahren auf der Schiene vorgesehen sind, wobei
die hinteren Führungsräder neben den Antriebsrädern angeordnet sind, und
das Doppelbetriebsart-Fahrzeug ferner eine Radbelastungssteuereinheit zum Steuern der Radbelastungen der Antriebsräder und der hinteren Führungsräder umfasst, wobei die Radbelastungssteuereinheit Folgendes umfasst:

Leerlaufbeurteilungsmittel zum Beurteilen, ob die Antriebsräder im Leerlauf sind oder nicht;
Antriebsleistungsverbesserungsmittel zum Erhöhen der Radbelastung der Antriebsräder, während sie die hinteren Führungsräder am Verlassen der Schiene hindern, indem sie die Radbelastung der hinteren Führungsräder verringern, so dass ihre Radbelastung nicht unter einen vorgegebenen minimalen Schwellenwert fällt, bei dem die Leerlaufbeurteilungsmittel urteilen, dass die Antriebsräder im Leerlauf sind; und
Laufstabilitätsverbesserungsmittel zum Verringern der Radbelastung der Antriebsräder, während sie die hinteren Führungsräder am Leerlauf hindern, indem sie die Radbelastung der hinteren Führungsräder erhöhen, so dass ihre Radbelastung einen vorgegebenen maximalen Schwellenwert nicht überschreitet, bei dem die Leerlaufbeurteilungsmittel urteilen, dass die Antriebsräder nicht im Leerlauf sind.

2. Doppelbetriebsart-Fahrzeug nach Anspruch 1, wobei die Antriebsräder mit einem kleineren Durchmesser ausgebildet sind als die Hinterreifen und eine im Wesentlichen flache Lauffläche besitzen, die in Breitenrichtung im gesamten Bereich ausgebildet ist.

3. Doppelbetriebsart-Fahrzeug nach Anspruch 1 oder 2, wobei die Antriebsräder aus einem Gummimaterial hergestellt sind.

4. Doppelbetriebsart-Fahrzeug nach Anspruch 1 oder 2, wobei die Antriebsräder aus einem Kunstharzmaterial hergestellt sind.

5. Doppelbetriebsart-Fahrzeug nach einem der Ansprüche 1 bis 4, wobei die vorderen und hinteren Führungsräder so aufgebaut sind, dass ihre Breitenabmessungen auf einen größeren Wert als die Standardbreitenabmessung von Rädern zum Fahren auf einer Schiene eingestellt sind, so dass sie einem vorgegebenen breiten Schienenbereich entsprechen, der eine breitere Spurweitenabmessung als die Standardspurweitenabmessung besitzt.

6. Doppelbetriebsart-Fahrzeug nach einem der Ansprüche 1 bis 5, wobei die vorderen und hinteren Führungsräder so aufgebaut sind, dass ihr Flanschwinkel auf einen größeren Wert als der Standardflanschwinkel von Rädern zum Fahren auf einer Schiene eingestellt ist.

7. Doppelbetriebsart-Fahrzeug nach einem der Ansprüche 1 bis 6, wobei die vorderen und hinteren Führungsräder so aufgebaut sind, dass ihre Flanschhöhe auf einen größeren Wert als die Standardflanschhöhe von Rädern zum Fahren auf einer Schiene eingestellt ist.

8. Verfahren zum Fahren eines Doppelbetriebsart-Fahrzeugs, wobei das Doppelbetriebsart-Fahrzeug nach einem der Ansprüche 1 bis 7 auf einer Verbundstruktur fährt, die einen Schienenbereich und eine Reifenfahrfläche umfasst; wobei eine Spurführung ausgeführt wird, indem die vorderen und hinteren Führungsräder in Kontakt mit dem Schienenbereich der Verbundstruktur gebracht werden, und eine Antriebskraft erzeugt wird, indem die Hinterreifen in Kontakt mit der Reifenfahrfläche der Verbundstruktur gebracht werden.

9. Verfahren zum Steuern der Radbelastungen der Antriebsräder des Doppelbetriebsart-Fahrzeugs nach einem der Ansprüche 1 bis 7 und seiner hinteren Führungsräder, das Folgendes umfasst:

einen Leerlaufbeurteilungsschritt zum Beurteilen, ob die Antriebsräder im Leerlauf sind oder nicht;

einen Antriebsleistungsverbesserungsschritt zum Erhöhen der Radbelastung der Antriebsräder, während die hinteren Führungsräder am Verlassen der Schiene gehindert werden, indem die Radbelastung der hinteren Führungsräder verringert wird, so dass ihre Radbelastung nicht unter einen vorgegebenen minimalen Schwellenwert fällt, bei dem beurteilt wird, dass die Antriebsräder im Leerlauf sind; und

einen Laufstabilitätsverbesserungsschritt zum Verringern der Radbelastung der Antriebsräder, während die hinteren Führungsräder am Leerlauf gehindert werden, indem die Radbelastung der hinteren Führungsräder erhöht wird, so dass ihre Radbelastung nicht einen vorgegebenen maximalen Schwellenwert überschreitet, bei dem beurteilt wird, dass die Antriebsräder nicht im Leerlauf sind.

10. Struktur zum Umwandeln der Fahrbetriebsarten, durch die eine Fahrbetriebsart des Doppelbetriebsart-Fahrzeugs nach einem der Ansprüche 1 bis 7 von einer Straßenfahrbetriebsart in eine Schienenfahrbetriebsart umgewandelt wird und die Folgendes umfasst:

eine Reifenfahrfläche, auf der das Doppelbetriebsart-Fahrzeug unter Verwendung der Vorder- und Hinterreifen zum Fahren gebracht wird;

einen Leitbereich zum Leiten des Doppelbetriebsart-Fahrzeugs auf eine vorgegebene Schiene;

einen Schienenbereich, der eine breitere Spurweitenabmessung als die Standardspurweitenabmessung besitzt;

einen Spurweitenänderungsbereich, der für den breiten Schienenbereich ausgelegt ist, wobei seine Spurweite sich allmählich von der breiten Spurweitenabmessung zu der Standardspurweitenabmessung ändert.

11. Doppelbetriebsart-Transportsystem, das Folgendes umfasst:

ein Doppelbetriebsart-Fahrzeug nach einem der Ansprüche 1 bis 7,

eine Straße, auf der das Doppelbetriebsart-Fahrzeug unter Verwendung der Vorder- und Hinterreifen fahren kann;

eine Schiene, die die Standardspurweitenabmessung aufweist und auf der das Doppelbetriebsart-Fahrzeug unter Verwendung der vorderen und hinteren Führungsräder und der Antriebsräder fahren kann; und

eine Struktur zum Umwandeln der Fahrbetriebsarten nach Anspruch 10, die zwischen der Straße und der Schiene angeordnet ist;

wobei, während das Doppelbetriebsart-Fahrzeug, das in einer Straßenfahrbetriebsart ist, unter Verwendung der Struktur zum Umwandeln der Fahrbetriebsarten für eine Schienenfahrbetriebsart umgewandelt wird, das Doppelbetriebsart-Fahrzeug, das in einer Schienenfahrbetriebsart ist, für eine Straßenfahrbetriebsart umgewandelt wird.

**Revendications**

1. Véhicule bi-mode comprenant :

des pneus avant et arrière fixés à des parties avant et arrière du véhicule par le biais d'essieux ;

des roues motrices pour la circulation sur une voie, lesquelles sont fixées aux mêmes essieux que ceux des pneus arrière ; et

des roues de guidage avant et arrière, lesquelles sont réalisées de manière à pouvoir être relevées et situées au niveau des parties avant et arrière du véhicule, pour la circulation sur la voie, les roues de guidage arrière étant disposées de manière adjacente au roues motrices, et le véhicule comprenant en outre une unité de contrôle de charge de roue pour contrôler les charges de roue des roues motrices et des roues de guidage arrière, l'unité de contrôle de charge de roue comportant :

des moyens de détermination de roulement à vide pour déterminer si les roues motrices tournent ou non à vide ;

des moyens d'amélioration de performance d'entraînement pour augmenter la charge de roue des roues motrices, tout en empêchant les roues de guidage arrière de s'échapper de la voie, en réduisant la charge de roue des roues de guidage arrière de telle sorte que la charge de roue de celles-ci ne tombe pas en dessous d'une valeur seuil minimale prédéterminée à laquelle il est déterminé par les moyens de détermination de roulement à vide que les roues motrices tournent à vide ; et

des moyens d'amélioration de stabilité de circulation pour réduire la charge de roue des roues motrices, tout en empêchant les roues motrices de tourner à vide, en augmentant la charge de roue des roues de guidage arrière de telle sorte que la charge de roue de celles-ci ne dépasse pas une valeur seuil maximale prédéterminée à laquelle il est déterminé par les moyens de détermination de roulement à vide que les roues motrices ne tournent pas à vide.

2. Véhicule bi-mode selon la revendication 1, dans lequel les roues motrices sont réalisées de manière à présenter un diamètre plus petit que celui des pneus arrière et ont une table de roulement sensiblement plate formée dans la totalité de la région de la direction de la largeur de celles-ci.

3. Véhicule bi-mode selon la revendication 1 ou 2, dans lequel les roues motrices sont composées d'un matériau en caoutchouc.

4. Véhicule bi-mode selon la revendication 1 ou 2, dans lequel les roues motrices sont composées d'un matériau en résine synthétique.

5. Véhicule bi-mode selon l'une quelconque des revendications 1 à 4, dans lequel les roues de guidage avant et arrières sont composées de telle sorte que les dimensions en largeur de celles-ci soient réglées à une valeur plus grande que la dimension en largeur standardisée de roue pour la circulation sur une voie de manière à correspondre à une étendue de voie large prédéterminée ayant une plus large dimension d'écartement des rails que la dimension d'écartement des rails standardisée.

6. Véhicule bi-mode selon l'une quelconque des revendications 1 à 5, dans lequel les roues de guidage avant et arrières sont composées de telle sorte que l'angle de boudin de celles-ci soit réglé à une valeur supérieure à l'angle de boudin standardisé de roues pour la circulation sur une voie.

7. Véhicule bi-mode selon l'une quelconque des revendications 1 à 6, dans lequel les roues de guidage avant et arrières sont composées de telle sorte que la hauteur de boudin soit réglée à une valeur supérieure à la hauteur de boudin standardisée de roues pour la circulation sur une voie.

8. Procédé de circulation d'un véhicule bi-mode dans lequel le véhicule bi-mode selon l'une quelconque des revendications 1 à 7 circule sur une structure composite comportant une étendue de voie et une surface de roulement de pneus ; le guidage sur la voie étant effectué en amenant les roues de guidage avant et arrière en contact avec l'étendue de voie de la structure composite, et une force d'entraînement étant générée en amenant les pneus arrière en contact avec la surface de roulement de pneus de la structure composite.

9. Procédé de contrôle de charges de roue des roues motrices du véhicule bi-mode selon l'une quelconque des revendications 1 à 7 et des roues de guidage arrière de celui-ci, comprenant :

une étape de détermination de roulement à vide pour déterminer si les roues motrices tournent ou non à vide ;

une étape d'amélioration de performance d'entraînement pour augmenter la charge de roue des roues motrices, tout en empêchant les roues de guidage arrière de s'échapper des rails, en réduisant la charge de roue des roues de guidage arrière de telle sorte que la charge de roue de celles-ci ne tombe pas en dessous d'une valeur seuil minimale prédéterminée à laquelle il est déterminé dans l'étape de détermination de roulement à vide que les roues motrices tournent à vide ; et

une étape d'amélioration de stabilité de circulation pour réduire la charge de roue des roues motrices, tout en empêchant les roues motrices de tourner à vide, en augmentant la charge de roue des roues de guidages arrière de telle sorte que la charge de roue de celles-ci ne dépasse pas une valeur seuil maximale prédéterminée à laquelle il est déterminé dans l'étape de détection d'état de révolution que les roues d'entraînement ne tournent pas à vide.

10. Structure de conversion de modes de circulation, au moyen de laquelle un mode de circulation du véhicule bi-mode selon l'une quelconque des revendications 1 à 7 est converti d'un mode de circulation sur route en un mode de circulation sur voie, comprenant :

une surface de roulement de pneus sur laquelle le véhicule bi-mode est amené à circuler au moyen des pneus avant et arrière ;

une étendue de guidage pour guider le véhicule bi-mode jusqu'à une voie prédéterminée ;

une étendue de voie large ayant une plus large dimension d'écartement des rails que l'étendue d'écartement des rails standardisée ; et

une étendue de changement d'écartement des rails construite sur l'étendue de voie large, dont l'écartement des rails change graduellement de la dimension d'écartement des rails large jusqu'à la dimension d'écartement des rails standardisée.

**11.** Système de transport bi-mode, comprenant :

un véhicule bi-mode selon l'une quelconque des revendications 1 à 7,

une route sur laquelle le véhicule bi-mode peut circuler au moyen des pneus avant et des pneus arrière ;

une voie présentant la dimension d'écartement des rails standardisée dans laquelle le véhicule bi-mode peut circuler au moyen des roues de guidage avant et arrière et des roues motrices ; et

une structure de conversion de modes de circulation selon la revendication 10, laquelle est disposée entre la route et la voie ;

dans lequel, tandis que le véhicule bi-mode qui est en mode de circulation sur route est converti en un mode de circulation sur voie au moyen de la structure de conversion des modes de circulation, le véhicule bi-mode qui est en mode de circulation sur voie est converti en mode de circulation sur route.

# FIG.1

RIGHT

FRONT ← → REAR

LEFT

EP 1 652 698 B1

## FIG.2

## FIG.3

# FIG.4

LEFT ←——→ RIGHT

EP 1 652 698 B1

# FIG.5

EP 1 652 698 B1

# *FIG.6A*

# *FIG.6B*

## FIG.7A

D=172(mm)  D=172(mm)

6b(7b)
6(7)
6c(7c)
6c(7c)
6b(7b)
6(7)
6a(7a)
6b(7b)
6b(7b)
R
R

HMAX=1159(mm)

## FIG.7B

$D_{STD}=120(mm)$  $D_{STD}=120(mm)$

50  50

R  R

$H_{STD}=1067(mm)$

# FIG.8A

EP 1 652 698 B1

# FIG.8B

12a

12b

10

11

15

FIG.9A

EP 1 652 698 B1

# FIG.9B

## FIG.10A

EP 1 652 698 B1

EP 1 652 698 B1

# FIG.10B

EP 1 652 698 B1

# FIG.11A

EP 1 652 698 B1

**FIG.11B**

FIG.12A

EP 1 652 698 B1

EP 1 652 698 B1

# FIG.12B

# FIG.13A

EP 1 652 698 B1

EP 1 652 698 B1

# FIG.13B

FIG14A

FIG.14B

EP 1 652 698 B1

# FIG.15A

EP 1 652 698 B1

FIG15B

# FIG.16A

EP 1 652 698 B1

# FIG.16B

EP 1 652 698 B1

## FIG.17A

7B

θ (87°)

7Bd

T
(33mm)

## FIG.17B

210

θ STD
(60°~65°)

211

$T_{STD}$
(27mm)

# FIG.18

```
                        ┌─────────────┐
                        │    START    │
                        └──────┬──────┘
                               │
        ┌──────────────────────▼──────────────────────┐
        │   DETECT VEHICLE RUNNING SPEED BY           │  S1
        │             SPEED SENSOR                    │
        │   DETECT REVOLUTION SPEED OF DRIVE          │
        │     WHEEL BY WHEEL SPEED SENSOR             │
        └──────────────────────┬──────────────────────┘
```

S2

DRIVE
WHEEL IDLY RUNS?
(DETECTION SPEED
< CALCULATION SPEED)

YES — NO

S3 — S7

CALCULATE LOAD OF REAR GUIDE WHEEL | CALCULATE LOAD OF REAR GUIDE WHEEL

S4 — S8

MINIMUM THRESHOLD VALUE OR MORE? — NO

MAXIMUM THRESHOLD VALUE OR MORE? — NO

YES — YES

S5 — REDUCE LOAD OF REAR GUIDE WHEEL BY CONTRACTION OF HYDRAULIC ACTUATOR

S9 — INCREASE LOAD OF REAR GUIDE WHEEL BY ELONGATION OF HYDRAULIC ACTUATOR

S6 — INCREASE LOAD OF DRIVE WHEEL

S10 — REDUCE LOAD OF DRIVE WHEEL

## *FIG.19*

## *FIG.20*

**EP 1 652 698 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11209087 B
- JP 2001233031 A
- US 3434432 A
- JP 51007609 A